# EUROPEAN PATENT APPLICATION

(11) **EP 3 306 103 A1**
(43) Date of publication of application: **11.04.2018**
(21) Application number: 15894286.2
(22) Date of filing: 30.10.2015
(51) Int. Cl.: F04D 29/44

(54) **BLOWER DEVICE AND CLEANER**

(30) Priority: 29.05.2015 US 201562168135 P; 29.05.2015 US 201562168165 P; 18.06.2015 US 201562181368 P; 10.09.2015 JP 2015178635
(71) Applicant: Nidec Corporation, Kyoto-shi, Kyoto 601-8205 (JP)
(72) Inventor: HAYAMITSU, Ryosuke, Kyoto-shi Kyoto 601-8205 (JP); SHIOZAWA Kazuhiko, Kyoto-shi Kyoto 601-8205 (JP)
(74) Representative: Stöckeler, Ferdinand
(86) International application number: PCT/JP2015/080699
(87) International publication number: WO 2016/194254

(57) **Abstract**

A blower device according to an exemplary embodiment of the invention includes a motor that includes a shaft centered around a central axis extending in a vertical direction, a stator surrounding the shaft, and a housing holding the stator, an impeller that is connected to an upper side of the shaft, an impeller housing that accommodates the impeller and includes an intake port, and an exhaust port that is positioned below a circumferential edge portion of the impeller housing. The exhaust port is positioned above the housing and opens downwards along a circumferential direction.

## Description

### Technical Field

The present invention relates to a blower device and a vacuum cleaner.

### Background Art

As an electric air blower (a blower device) built into a vacuum cleaner, there are electric air blowers described in PTL 1 and PTL 2.

### Citation List

### Patent Literature

PTL 1: Japanese Unexamined Patent Application Publication No. 2001-012395
PTL 2: Japanese Unexamined Patent Application Publication No. 2007-016705

### Summary of Invention

### Technical Problem

In the electric air blowers, a radial dimension of a blower unit that is disposed on one end side of a motor unit (a motor) in an axial direction and includes a centrifugal fan and a diffuser is larger than a radial dimension of the motor unit. Therefore, there is an issue in that a radial dimension of the entire vacuum cleaner becomes great.

An object of an aspect of the invention is to provide an air blowing device with a reduced radial dimension. Solution to Problem

An air blowing device according to an exemplary embodiment of the invention is an air blowing device including a motor that includes a shaft centered around a central axis extending in a vertical direction, a stator surrounding the shaft, and a housing holding the stator, an impeller that is connected to an upper side of the shaft, an impeller housing that accommodates the impeller and includes an intake port, and an exhaust port that is positioned below a circumferential edge portion of the impeller housing, in which the exhaust port is positioned above the housing and opens downwards along a circumferential direction. Advantageous Effects of Invention

According to the invention, it is possible to provide a blower device with a reduced radial dimension.

### Brief Description of Drawings

[Fig. 1] Fig. 1 is a sectional view illustrating a blower device according to an embodiment.
[Fig. 2] Fig. 2 is an exploded perspective view illustrating the blower device according to the embodiment.
[Fig. 3] Fig. 3 is a perspective view of a motor according to the embodiment as seen from below.
[Fig. 4] Fig. 4 is a perspective view of a stator according to the embodiment.
[Fig. 5] Fig. 5 is an exploded perspective view illustrating the stator, a circuit board, and a lower cover.
[Fig. 6] Fig. 6 is a plan sectional view of the motor.
[Fig. 7] Fig. 7 is an explanation view illustrating how a rotation sensor is mounted.
[Fig. 8] Fig. 8 is a perspective view of a stationary blade member as seen from below.
[Fig. 9] Fig. 9 is an enlarged sectional view partially illustrating an impeller, the stationary blade member, and an impeller housing.
[Fig. 10] Fig. 10 is a partial side view of the stationary blade member.
[Fig. 11] Fig. 11 is a plan view of moving blades of the impeller.
[Fig. 12] Fig. 12 is a perspective view illustrating a blower device in Modification Example 1.
[Fig. 13] Fig. 13 is a sectional view illustrating the blower device in Modification Example 1.
[Fig. 14] Fig. 14 is an exploded perspective view of the blower device in Modification Example 1.
[Fig. 15] Fig. 15 is a perspective view of the motor in Modification Example 1 as seen from below.
[Fig. 16] Fig. 16 is a perspective view of a stator in Modification Example 1.
[Fig. 17] Fig. 17 is an exploded perspective view illustrating the stator, a sensor board, and a lower cover in Modification Example 1.
[Fig. 18] Fig. 18 is a plan sectional view of the motor in Modification Example 1.
[Fig. 19] Fig. 19 is a partial sectional perspective view of an exhaust gas guiding member in Modification Example 1.
[Fig. 20] Fig. 20 is a partial enlarged sectional view illustrating a first guidance path in the blower device in Modification Example 1.
[Fig. 21] Fig. 21 is a partial enlarged sectional view illustrating a second guidance path in the blower device in Modification Example 1.
[Fig. 22] Fig. 22 is a side view of the blower device in Modification Example 1.
[Fig. 23] Fig. 23 is a sectional view illustrating an impeller that can be adopted as Modification Example 2.
[Fig. 24] Fig. 24 is a vertical sectional view of a blower device in Modification Example 3.
[Fig. 25] Fig. 25 is a perspective view of a vacuum cleaner including a blower device.

### Description of Embodiments

Hereinafter, a motor according to an embodiment of the invention will be described with reference to drawings. Note that, the scope of the invention is not limited to the following embodiment and arbitrary modification can be made without departing from the technical idea of the invention. In addition, in the following drawings, in order to facilitate understanding of each component, the scale, the number, and the like of each component may be different from those of the actual component.

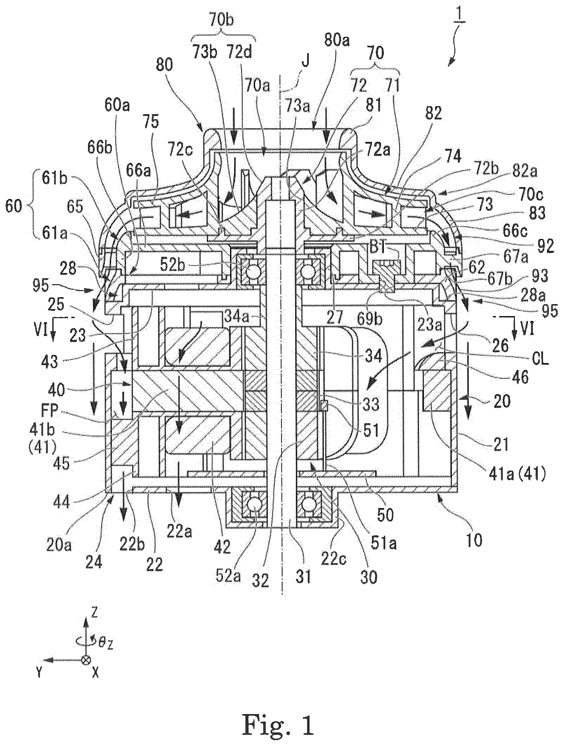

In addition, in the drawings, an XYZ coordinate system will be appropriately illustrated as a three-dimensional rectangular coordinate system. In the XYZ coordinate system, a Z-axis direction refers to a direction parallel to an axial direction along a central axis J illustrated in Fig. 1. A Y-axis direction refers to a direction orthogonal to the Z-axis direction and is a right-left direction in Fig. 1. An X-axis direction refers to a direction that is orthogonal to both of the Y-axis direction and the Z-axis direction.

In addition, in the following description, a direction (the Z-axis direction) in which the central axis J extends will be referred to as a vertical direction. The positive side in the Z-axis direction will be referred to as the "upper side (the axially upper side)" and the negative side in the Z-axis direction will be referred to as the "lower side (the axially lower side)". Note that, the vertical direction, the upper side, and the lower side are names that are used simply for the purpose of description and do not limit the actual positional relationship or direction. In addition, unless otherwise specifically noted, a direction (the Z-axis direction) parallel to the central axis J will be simply referred to as an "axial direction", a radial direction around the central axis J will be simply referred to as a "radial direction", and a circumferential direction around the central axis J will be simply referred to as a "circumferential direction".

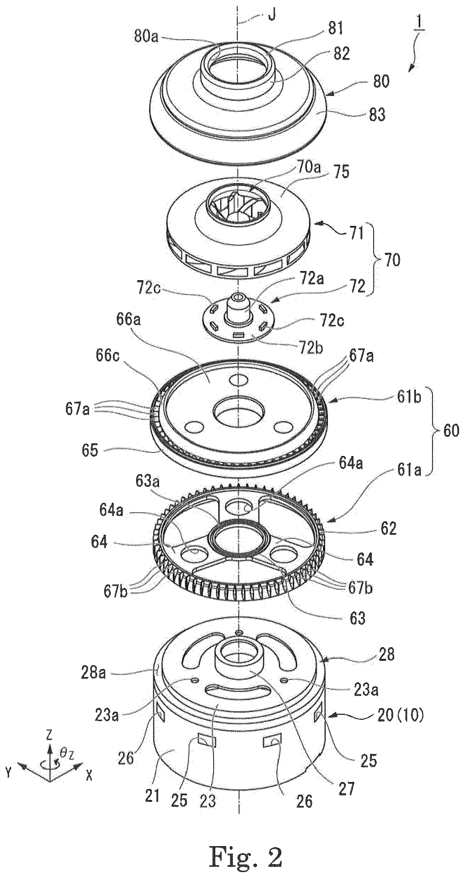

Fig. 1 is a sectional view illustrating a blower device in the embodiment. Fig. 2 is an exploded perspective view of the blower device in the embodiment.

As illustrated in Figs. 1 and 2, a blower device 1 includes a motor 10, an impeller 70, a stationary blade member 60, an impeller housing 80 that accommodates the impeller 70 and includes an intake port 80a, and an exhaust port 95 that is positioned between the motor 10 and the impeller housing 80.

The stationary blade member 60 is attached to an upper side (the +Z side) of the motor 10. The impeller housing 80 is attached to an upper side of the stationary blade member 60. The impeller 70 is accommodated between the stationary blade member 60 and the impeller housing 80. The impeller 70 is attached to the motor 10 such that the impeller 70 can rotate around the central axis J.

### [Motor]

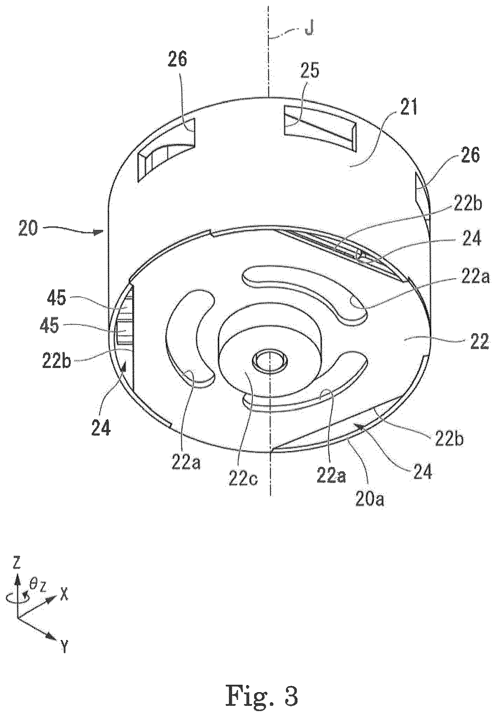

Fig. 3 is a perspective view of a motor according to the embodiment as seen from below.

As illustrated in Fig. 1, the motor 10 includes a lower cover 22, a rotor 30 that includes a shaft 31, a stator 40 that surrounds the shaft 31, a circuit board 50, a lower bearing 52a, an upper bearing 52b, and a housing 20 that holds the stator 40. That is, the motor 10 includes the shaft 31, the stator 40, and the housing 20 that holds the stator 40.

The housing 20 is a covered cylindrical container that accommodates the rotor 30 and the stator 40. The housing 20 includes a cylindrical circumferential wall 21, an upper cover portion 23 that is positioned on an upper end of the circumferential wall 21, and an upper bearing holding portion 27 that is positioned on the central portion of the upper cover portion 23. The stator 40 is fixed to an inner surface of the housing 20. The upper bearing holding portion 27 has a tubular shape that protrudes upwards from the central portion of the upper cover portion 23. The upper bearing holding portion 27 holds the upper bearing 52b inside thereof.

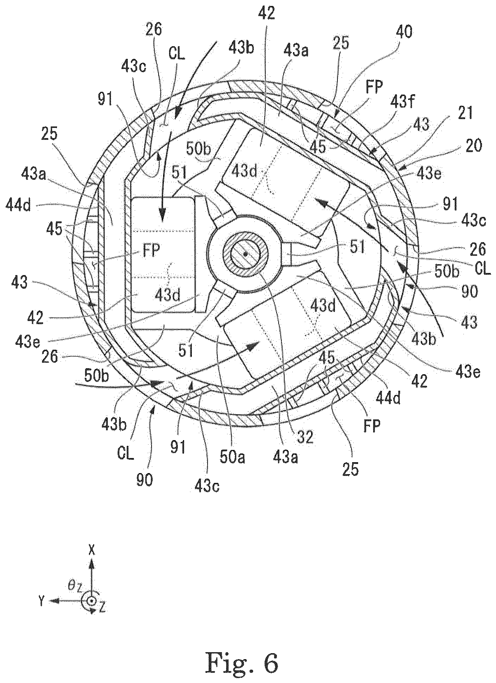

As illustrated in Figs. 1 and 3, through-holes 25 and 26 that penetrate the housing 20 in the radial direction are provided on the upper side of the circumferential wall of the housing 20. On the circumferential wall of the housing 20, three through-holes 25 and three through-holes 26 are alternately positioned around the axis (refer to Fig. 6). According to this configuration, a portion of air discharged through the exhaust port 95, which will be described later, flows into the housing 20 such that a stator core 41 or coils 42 can be cooled. A stepped portion 28 that surrounds the upper cover portion 23 around the axis is provided between the circumferential wall 21 of the housing 20 and the upper cover portion 23.

The lower cover 22 is attached to an opening portion of the housing 20 that is on the lower side (a -Z side). A lower bearing holding portion 22c having a tubular shape that protrudes downwards from a lower surface of the lower cover 22 is provided on the central portion of the lower cover 22. The lower bearing holding portion 22c holds the lower bearing 52a.

As illustrated in Fig. 3, on the lower cover 22, three arc-shaped through-holes 22a, each of which has a width in the radial direction, are provided around the axis. An outer circumferential end of the lower cover 22 is provided with three cut-out portions 22b that are obtained by linearly cutting an outer circumferential portion of the lower cover 22. Gaps between an opening end 20a of the housing 20 that is on the lower side and the cut-out portions 22b are lower opening portions 24 of the motor 10.

As illustrated in Fig. 1, the rotor 30 includes the shaft 31, a rotor magnet 33, a lower magnet fixing member 32, and an upper magnet fixing member 34. The rotor magnet 33 has a cylindrical shape that surrounds the shaft 31 around the axis (a θz direction) from the outer side in the radial direction. Each of the lower magnet fixing member 32 and the upper magnet fixing member 34 has a cylindrical shape of which the diameter is the same as that of the rotor magnet 33. The lower magnet fixing member 32 and the upper magnet fixing member 34 are attached to the shaft 31 with the rotor magnet 33 being interposed therebetween in the axial direction. An upper portion of the upper magnet fixing member 34 in a central axis direction is provided with a small-diameter portion 34a of which the diameter is smaller than that of the lower side (the rotor magnet 33 side).

The shaft 31 is centered around the central axis J that extends in the vertical direction. The shaft 31 is supported by the lower bearing 52a and the upper bearing 52b such that the shaft 31 can rotate around the axis (the θz direction). The impeller 70 is attached to an end portion of the shaft 31 that is on the upper side (the +Z side). The impeller 70 integrally rotates with the shaft 31 around the axis.

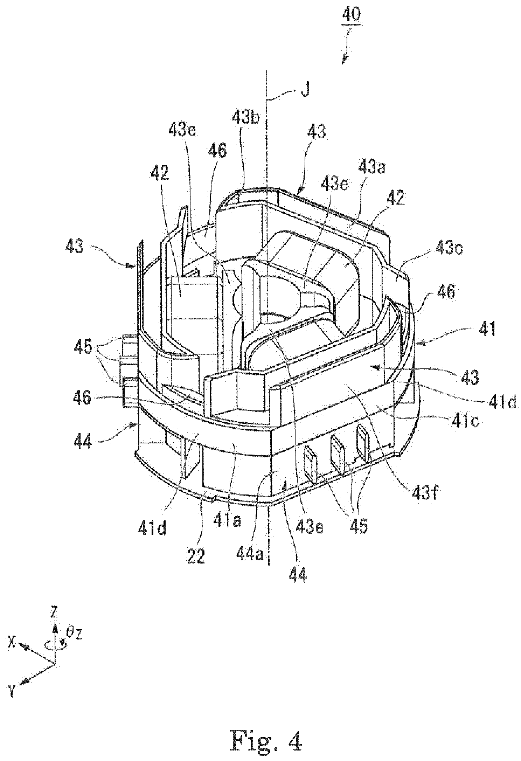

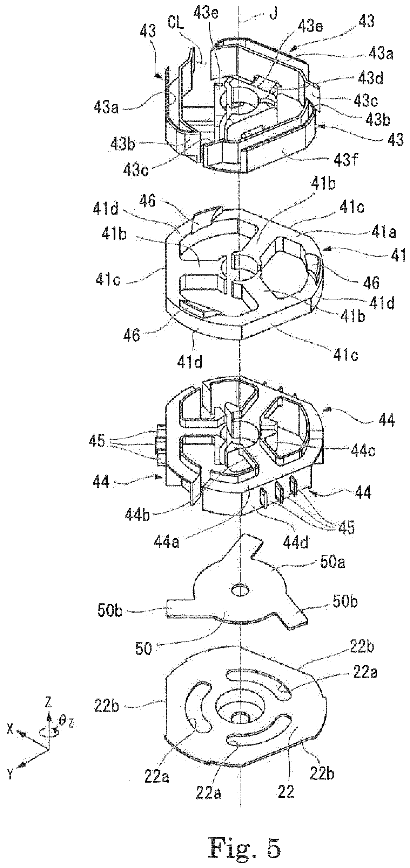

Fig. 4 is a perspective view of the stator according to the embodiment. Fig. 5 is an exploded perspective view illustrating the stator 40, the circuit board 50, and the lower cover 22. Fig. 6 is a plan sectional view of the motor 10.

The stator 40 is positioned radially outward of the rotor 30. The stator 40 surrounds the rotor 30 around the axis (the θz direction). As illustrated in Figs. 4 and 5, the stator 40 includes the stator core 41, a plurality of (three) upper insulators 43, a plurality of (three) lower insulators 44, and the coils 42.

As illustrated in Fig. 5, the stator core 41 includes a core back portion 41a and a plurality of (three) tooth portions 41b. The core back portion 41a has a ring-like shape that extends around the central axis. The core back portion 41a has a configuration in which three linear portions 41c and three arc portions 41d are alternately positioned around the axis. Each tooth portion 41b extends radially inwards from an inner circumferential surface of each linear portion 41c. The tooth portions 41b are disposed at regular intervals in the circumferential direction. An inclined member 46 that guides exhaust gas inwards in the stator 40 is disposed on an upper surface of each arc portion 41d of the core back portion 41a. Each inclined member 46 has a shape in which the thickness decreases toward the inner side from the outer side in the radial direction.

The upper insulators 43 are insulating members that cover a portion of an upper surface and a side surface of the stator core 41. The upper insulators 43 are provided to respectively correspond to the three tooth portions 41b. Each upper insulator 43 includes an upper outer circumferential wall portion 43a that is positioned above the core back portion 41a, an upper inner circumferential wall portion 43e that is positioned above a tip end of the tooth portion 41b, and an upper insulating portion 43d that connects the upper outer circumferential wall portion 43a and the upper inner circumferential wall portion 43e to each other in the radial direction and is positioned above a portion of the tooth portion 41b around which a coil is wound.

The lower insulators 44 are insulating members that cover a portion of a lower surface and the side surface of the stator core 41. The lower insulators 44 are provided to respectively correspond to the three tooth portions 41b. Each lower insulator 44 includes a lower outer circumferential wall portion 44a that is positioned below the core back portion 41a, a lower inner circumferential wall portion 44c that is positioned below the tip end of the tooth portion 41b, and a lower insulating portion 44b that connects the lower outer circumferential wall portion 44a and the lower inner circumferential wall portion 44c to each other in the radial direction and is positioned below the portion of the tooth portion 41b around which the coil is wound.

The upper insulators 43 and the lower insulators 44 are disposed such that the tooth portions 41b of the stator core 41 are interposed therebetween in the vertical direction. The coils 42 are wound around the tooth portions 41b covered by the upper insulating portions 43d of the upper insulators 43 and the lower insulating portions 44b of the lower insulators 44.

The three upper outer circumferential wall portions 43a positioned above the core back portion 41a of the stator core 41 surround the coils 42 at a position above the stator core 41. Each upper outer circumferential wall portion 43a includes a first side end surface 43b and a second side end surface 43c at opposite ends in the circumferential direction. Each first side end surface 43b is an inclined surface that is inclined with respect to the radial direction and that faces the outer side in the radial direction. Each second side end surface 43c is an inclined surface that is inclined with respect to the radial direction and that faces the inner side in the radial direction. A portion of an outer circumferential surface of each upper outer circumferential wall portion 43a that is positioned above the linear portion 41c is a flat surface 43f that is aligned with an outer circumferential surface of the linear portion 41c and extends in the axial direction. An arc-shaped surface that is disposed along an inner circumferential surface of the housing 20 is provided on each of the opposite sides of each flat surface 43f in the circumferential direction.

As illustrated in Fig. 6, the upper outer circumferential wall portions 43a that are adjacent to each other in the circumferential direction are separated from each other with a predetermined interval provided therebetween. The first side end surface 43b of one upper outer circumferential wall portion 43a of the adjacent upper outer circumferential wall portions 43a and the second side end surface 43c of the other upper outer circumferential wall portion 43a are disposed to face each other in the circumferential direction. The degree to which each first side end surface 43b is inclined with respect to the radial direction and the degree to which each second side end surface 43c is inclined with respect to the radial direction are different from each other. More specifically, the width of an opening portion 90, which is positioned close to the radially outer side of a gap CL formed between the adjacent upper outer circumferential wall portions 43a, in the circumferential direction is smaller than the width of an opening portion 91, which is positioned close to the radially inner side of the gap, in the circumferential direction.

The inclined members 46 disposed on the core back portion 41a are positioned below the gaps CL. The inclined members 46 are interposed between the first side end surfaces 43b and the second side end surfaces 43c. The gaps CL are positioned inward of the through-holes 26 of the housing 20. The through-holes 26 and the gaps CL serve as air flow paths that guide exhaust gas flowing from the outside of the housing 20 into the stator 40. An inclination direction (a direction from the outer side to the inner side in the radial direction) of each gap CL with respect to the radial direction as seen from above coincides with a flow direction of exhaust gas discharged from the stationary blade member 60 in the circumferential direction. That is, the inclination direction coincides with a rotation direction of the impeller 70.

As illustrated in Fig. 6, since the opening portions 90 that are positioned close to the inlets of the gaps CL are relatively large, a larger amount of exhaust gas can be sucked through the through-holes 26 and since the width of the opening portions 91 that are positioned close to the outlets is relatively small, air discharged through the gaps CL can be caused to flow toward a target position (the coils 42) more accurately. Accordingly, it is possible to more effectively cool the stator core 41 or the coils 42 by using air flowing from the through-holes 26.

The three lower outer circumferential wall portions 44a positioned below the core back portion 41a surround the coils 42 at a position below the stator core 41. Although a gap is provided between the lower outer circumferential wall portions 44a that are adjacent to each other in the circumferential direction, the lower outer circumferential wall portions 44a may be in contact with each other in the circumferential direction. A portion of an outer circumferential surface of each lower outer circumferential wall portion 44a that is positioned below the linear portion 41c of the core back portion 41a is a flat surface 44d that is aligned with the outer circumferential surface of the linear portion 41c and extends in the axial direction. An arc-shaped surface that is disposed along the inner circumferential surface of the housing 20 is provided on each of the opposite sides of each flat surface 44d in the circumferential direction.

A plurality of (in the drawing, three) plate-shaped portions 45 that extend in the axial direction are provided on each flat surface 44d. As illustrated in Fig. 6, the plate-shaped portions 45 are erected to be substantially perpendicular to each flat surface 44d. A tip end of each plate-shaped portion 45 that is on the outer side in the radial direction reaches the inner circumferential surface of the housing 20. The plate-shaped portions 45 partition a region between the lower outer circumferential wall portions 44a and the housing 20 into a plurality of regions in the circumferential direction.

As illustrated in Figs. 1 and 6, the circuit board 50 is disposed between the stator 40 and the lower cover 22. The circuit board 50 includes a circular ring-shaped main body portion 50a and three protruding portions 50b that protrude outwards in a direction oblique to the radial direction from an outer circumferential edge of the main body portion 50a. The main body portion 50a includes a through hole into which the shaft 31 is inserted. The circuit board 50 is fixed to the lower insulators 44.

As illustrated in Fig. 6, at least three rotation sensors 51 are mounted on the circuit board 50. Each rotation sensor 51 is, for example, a hall element. The circuit board 50 may be electrically connected with the coils 42. In this case, a drive circuit that outputs a drive signal with respect to the coils 42 may be mounted on the circuit board 50.

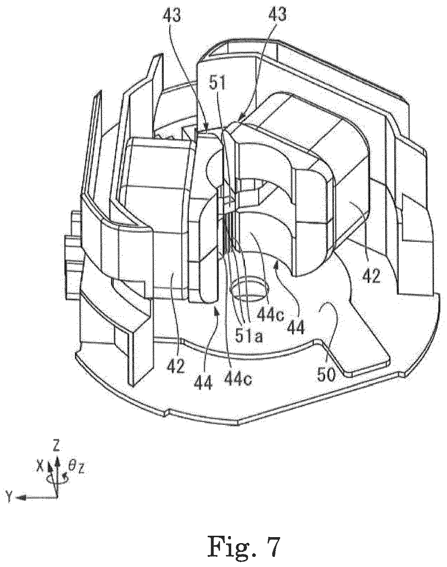

Fig. 7 is an explanation view illustrating how the rotation sensors 51 are mounted.

As illustrated in Figs. 6 and 7, each rotation sensor 51 is disposed being interposed between tip end portions of the lower inner circumferential wall portions 44c that are adjacent to each other in the circumferential direction. The three rotation sensors 51 are disposed at regular intervals of 120° in the circumferential direction. Radially inner surfaces of the rotation sensors 51 face the rotor magnet 33. In the case of the embodiment, the rotor magnet 33 is disposed at a central position in the rotor 30 in the axial direction. Therefore, the rotation sensors 51 are connected to the circuit board 50 via leads 51a of which the length corresponds to an axial length from the circuit board 50 to the rotor magnet 33. Since the three rotation sensors 51 are disposed being interposed between the tip end portions of the lower inner circumferential wall portions 44c that are adjacent to each other in the circumferential direction, it is possible to reduce the axial length of the motor 10 in comparison with, for example, a configuration in which a sensor magnet is disposed below the lower magnet fixing member 32 and the rotation sensors 51 are disposed below the sensor magnet.

A mechanism that supports the rotation sensor 51 may be provided on the tip end portion of each lower inner circumferential wall portion 44c. For example, it is possible to suppress the movement of the rotation sensors 51 in the radial direction by providing recess portions into which the rotation sensors 51 are inserted. Alternatively, the rotation sensors 51 may be fixed to the lower inner circumferential wall portions 44c in a snap-fitting manner or the like.

The lower cover 22 is attached to the opening end 20a of the housing 20 that accommodates the stator 40 and the circuit board 50. As illustrated in Fig. 1, at least a portion of the three through-holes 22a of the lower cover 22 is positioned radially outward of an outer circumferential end of the main body portion 50a of the circuit board 50.

The cut-out portions 22b on the outer circumferential portion of the lower cover 22 are disposed to substantially coincide with the linear portions 41c of the stator core 41, the flat surfaces 43f of the upper insulators 43, and the flat surfaces 44d of the lower insulators 44 as seen in the axial direction. The lower opening portions 24 of a lower surface of the motor 10 serve as exhaust ports of air flow paths FP between the stator 40 and the housing 20.

### [Stationary Blade Member, Impeller, and Impeller Housing]

Next, the stationary blade member, the impeller, and the impeller housing will be described.

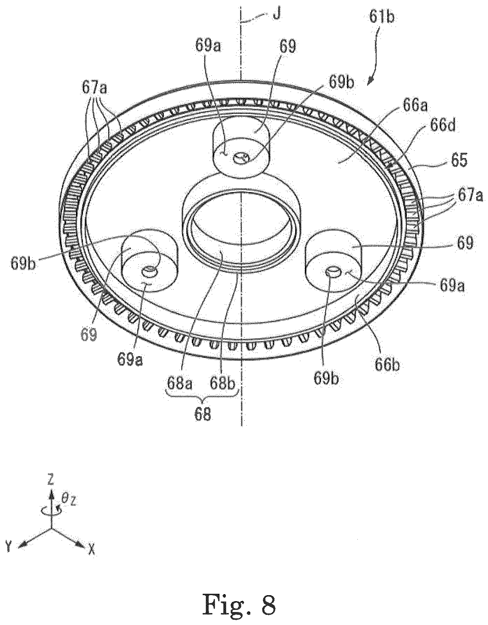

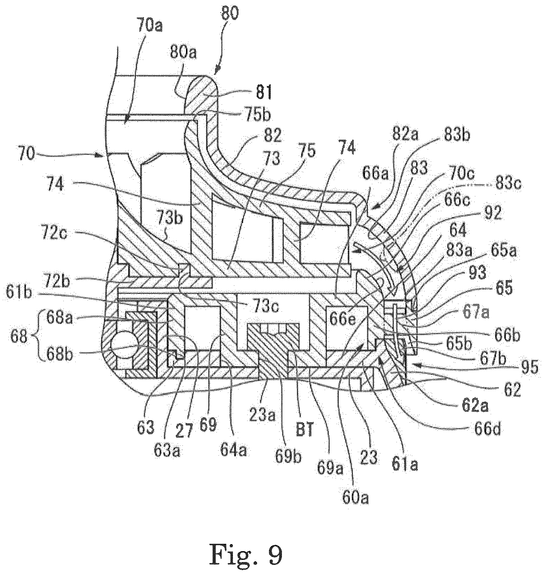

Fig. 8 is a perspective view of the stationary blade member as seen from below. Fig. 9 is an enlarged sectional view partially illustrating the impeller 70, a first stationary blade member 61a, a second stationary blade member 61b, and the impeller housing 80.

### <Stationary Blade Member>

The stationary blade member 60 is positioned between the impeller housing 80 and the housing 20. As illustrated in Figs. 1 and 2, the stationary blade member 60 includes the first stationary blade member 61a and the second stationary blade member 61b. The first stationary blade member 61a and the second stationary blade member 61b are attached to an upper surface of the motor 10 while being stacked in the axial direction.

The first stationary blade member 61a includes a lower stationary blade supporting ring 62, an attachment ring 63, three connection portions 64, and a plurality of lower stationary blades 67b. The lower stationary blade supporting ring 62 and the attachment ring 63 are coaxially disposed and are connected to each other via the three connection portions 64 that extend in the radial direction. The three connection portions 64 are disposed at regular intervals of 120° in the circumferential direction. Each connection portion 64 includes a through-hole 64a that penetrates each connection portion 64 in the axial direction. The three through-holes 64a are disposed at regular intervals of 120° in the circumferential direction. An upper surface of the attachment ring 63 is provided with a recess groove 63a that is concentric with the attachment ring 63.

The plurality of lower stationary blades 67b protrude radially outwards from an outer circumferential surface of the lower stationary blade supporting ring 62. The plurality of lower stationary blades 67b are disposed at regular intervals in the circumferential direction. The outer circumferential surface of the lower stationary blade supporting ring 62 has a tapered shape that becomes narrower toward the upper side. Each lower stationary blade 67b has a shape of which the width in the radial direction increases toward the upper side.

The second stationary blade member 61b includes a round flat ring-shaped supporting body 66a, a cylindrical upper stationary blade supporting ring 66b that extends downwards from an outer circumferential edge of the supporting body 66a, a plurality of upper stationary blades 67a, an outer circumferential ring 65 that is connected to a radially outer side of the upper stationary blades 67a, and an annular protruding portion 66c that protrudes upwards from the outer circumferential edge of the supporting body 66a. The plurality of upper stationary blades 67a connect an outer circumferential surface of the upper stationary blade supporting ring 66b and an inner circumferential surface of the outer circumferential ring 65 to each other in the radial direction. The upper stationary blade supporting ring 66b includes a stepped portion 66d that extends around an outer circumferential portion of a lower end portion thereof.

The lower stationary blade supporting ring 62 and the upper stationary blade supporting ring 66b constitute a stationary blade supporting ring 60a. That is, the lower stationary blade supporting ring 62 and the upper stationary blade supporting ring 66b are a portion of the stationary blade supporting ring 60a. The stationary blade member 60 includes a plurality of stationary blades (the upper stationary blades 67a and the lower stationary blades 67b) and the stationary blade supporting ring 60a that supports the plurality of stationary blades 67a and 67b. That is, the stationary blade supporting ring 60a supports the upper stationary blades 67a and the lower stationary blades 67b. The upper stationary blades 67a and the lower stationary blades 67b are positioned below a circumferential edge portion of the impeller housing 80.

As illustrated in Fig. 8, the supporting body 66a includes an attachment ring 68 that extends downwards from a lower surface of a central portion thereof and three columnar projecting portions 69 that protrude downwards from a lower surface of the supporting body 66a. The attachment ring 68 includes a cylindrical tube portion 68a and an annular protruding portion 68b that protrudes downwards from a radially outer circumferential portion of a lower end surface of the tube portion 68a. The three columnar projecting portions 69 have the same diameter and height and are disposed at regular intervals of 120° in the circumferential direction. In the embodiment, the columnar projecting portions 69 are hollow and each columnar projecting portion 69 includes a through-hole 69b that penetrates the center of a lower end surface 69a in the axial direction.

As illustrated in Figs. 1 and 9, the upper bearing holding portion 27 of the motor 10 is inserted into the attachment ring 63 of the first stationary blade member 61a. A lower end surface of the lower stationary blade supporting ring 62 of the first stationary blade member 61a comes into contact with a stepped surface 28a of the stepped portion 28 of the motor 10, the stepped surface 28a facing the upper side.

The second stationary blade member 61b is attached to the first stationary blade member 61a. As illustrated in Fig. 9, the upper bearing holding portion 27 is inserted into the attachment ring 68 of the second stationary blade member 61b. The protruding portion 68b, which is a lower tip end of the attachment ring 68, is fitted into the recess groove 63a of the first stationary blade member 61a. The stepped portion 66d of the upper stationary blade supporting ring 66b of the second stationary blade member 61b are fitted into an upper opening end of the lower stationary blade supporting ring 62. The outer circumferential surface of the upper stationary blade supporting ring 66b and the outer circumferential surface of the lower stationary blade supporting ring 62 are smoothly connected to each other in the vertical direction. The second stationary blade member 61b comes into contact with the upper surface of the attachment ring 63 of the first stationary blade member 61a at the tube portion 68a and a lower surface of the upper stationary blade supporting ring 66b. That is, at least a portion of a lower portion of the second stationary blade member 61b abuts onto at least a portion of an upper portion of the first stationary blade member 61a. Note that, the lower portion of the second stationary blade member 61b is a surface of the second stationary blade member 61b that faces the lower side and the upper portion of the first stationary blade member 61a is a surface of the first stationary blade member 61a that faces the upper side. Accordingly, it is possible to strengthen the fastening between the motor 10 and the second stationary blade member 61b even when there is a change in temperature of the blower device 1.

The columnar projecting portions 69 of the second stationary blade member 61b are inserted into the through-holes 64a of the first stationary blade member 61a. The end surface 69a of each columnar projecting portion 69 comes into contact with an upper surface of the upper cover portion 23 of the motor 10. The second stationary blade member 61b and the motor 10 are fastened to each other by bolts BT that are inserted into the through-holes 69b of the columnar projecting portions 69 and screw holes 23a of the upper cover portion 23. The first stationary blade member 61a is positioned in the circumferential direction by the columnar projecting portions 69 of the second stationary blade member 61b and is fixed to the motor 10 by being pressed by the attachment ring 68 and the upper stationary blade supporting ring 66b of the second stationary blade member 61b.

In the embodiment, two members (the first stationary blade member 61a and the second stationary blade member 61b) constitute a stationary blade member 61 and the metal housing 20 of the motor 10 is fastened only to the second stationary blade member 61b. Since such a fixing method is used, it is possible to suppress a fastening failure between the motor 10 and the stationary blade member 60 which occurs when there is a change in temperature of the blower device 1.

Specifically, if the first stationary blade member 61a and the second stationary blade member 61b are fixed to the motor 10 by inserting the same bolts BT into the both of the first stationary blade member 61a and the second stationary blade member 61b, the amount of change in volume due to a temperature change becomes great since the bolts BT fasten two resin members. In this case, the stationary blade member 60 may contract and vibrate in a low-temperature environment. However, in the embodiment, since the end surfaces 69a of the columnar projecting portions 69 of the second stationary blade member 61b are fastened to the housing 20 with the bolts BT in a state of being in contact with the housing 20, it is possible to reduce the thickness of a resin member fixed by the bolts BT. Accordingly, the amount of change in volume at the time of the temperature change becomes small and thus it is possible to suppress the fastening being loosened.

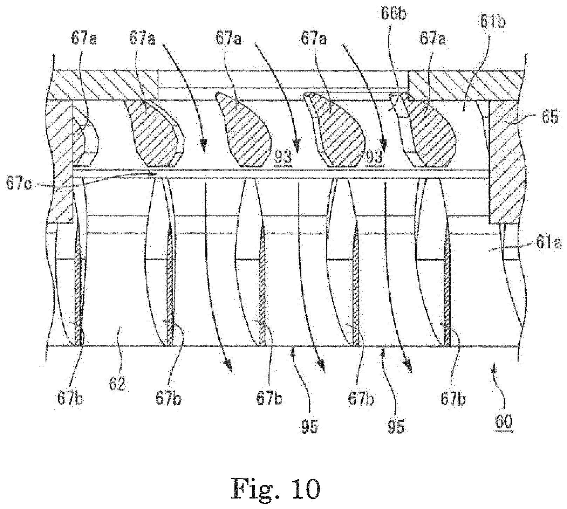

Fig. 10 is a partial side view of the stationary blade member 60.

As illustrated in Fig. 10, the number of upper stationary blades 67a disposed in the circumferential direction is the same as the number of lower stationary blades 67b disposed in the circumferential direction. The upper stationary blades 67a and the lower stationary blades 67b respectively correspond to each other and are disposed being arranged in the axial direction. In the case of the embodiment, an inclination angle of each upper stationary blade 67a with respect to the axial direction is larger than an inclination angle of each lower stationary blade 67b with respect to the axial direction. The upper stationary blades 67a are disposed being inclined at a relatively large angle such that exhaust gas flowing in a direction inclined with respect to the rotation direction of the impeller 70 is effectively caused to flow into an area between the upper stationary blades 67a. The lower stationary blade 67b guides the exhaust gas downwards such that the exhaust gas discharged via the exhaust port 95 does not flow to the outer side in the radial direction.

In the embodiment, a gap 67c is a gap extending in a horizontal direction. However, the gap 67c may be a gap that extends in a direction oblique with respect to the horizontal direction. In a case where the gap 67c is a gap extending in an oblique direction, the same direction as an inclination direction of the upper stationary blades 67a is preferable. When such a gap extending in an oblique direction is provided, exhaust gas passes through the gap and thus it is possible to effectively use the entire portion of an exhaust gas flow path 93.

In the embodiment, as illustrated in Fig. 9, the exhaust gas flow path 93 moves radially outwards in the vicinity of the exhaust port 95. That is, the outer circumferential surface of the lower stationary blade supporting ring 62 of the first stationary blade member 61a has a tapered shape of which the diameter increases toward the lower side and includes an inclined portion 62a. That is, the stationary blade supporting ring 60a includes the inclined portion 62a that expands radially outwards toward the lower side. Since the inclined portion 62a is provided, the exhaust gas flow path 93 moves radially outwards in the vicinity of the exhaust port 95. Accordingly, the exhaust gas flow path 93 expands radially outwards toward the lower side and the sectional area of the exhaust gas flow path 93 in the horizontal direction gradually increases toward the exhaust port 95. Therefore, it is possible to reduce an exhaust sound that is generated when air is discharged from the exhaust port 95. In addition, a lower ring 65b, which is a portion of the outer circumferential ring 65 of the second stationary blade member 61b and faces the lower stationary blade supporting ring 62 in the radial direction, has a skirt-like shape of which the inner circumference increases toward the lower side. Accordingly, the exhaust gas flow path 93 expands radially outwards with the width thereof in the radial direction being maintained.

Note that, in the embodiment, the stationary blade member 60 includes the first stationary blade member 61a and the second stationary blade member 61b that is separated from the first stationary blade member 61a. Furthermore, the first stationary blade member 61a includes the lower stationary blade supporting ring 62 that is a portion of the stationary blade supporting ring 60a and that includes the inclined portion 62a. In addition, the second stationary blade member 61b includes the upper stationary blades 67a, the lower stationary blades 67b, and the upper stationary blade supporting ring 66b that is a portion of the stationary blade supporting ring 60a and is positioned above the lower stationary blade supporting ring 62. Since the stationary blade member 60 is configured of the first stationary blade member 61a and the second stationary blade member 61b which are obtained when dividing the stationary blade member 60 into upper and lower parts, it is possible to mold the inclined portion 62a by adopting a simple mold structure when molding the stationary blade member 60 with a mold.

### <Impeller>

The impeller 70 is connected to the upper side of the shaft 31. The impeller 70 discharges fluid that is sucked via an intake port 70a, which opens upwards, radially outwards via an internal flow path. The impeller 70 includes an impeller main body 71 and an impeller hub 72.

The impeller main body 71 includes a base portion 73, a plurality of moving blades 74, and a shroud 75. That is, the impeller 70 includes the base portion 73, the plurality of moving blades 74, and the shroud 75. The base portion 73 is positioned below the moving blades 74. The impeller 70 includes the plurality of moving blades and the disc-shaped base portion 73 that is positioned below the moving blades. The base portion 73 includes a through-hole 73a that penetrates a central portion thereof in the axial direction. A portion of the base portion 73 that is in the vicinity of the through-hole 73a is a conical surface-shaped inclined surface portion 73b that protrudes upwards. Each of the moving blades 74 is a plate-shaped member that extends from the inner side to the outer side in the radial direction on an upper surface of the base portion 73 and is curved in the circumferential direction. The moving blades 74 are disposed being erected along the axial direction. The shroud 75 has a cylindrical shape that becomes narrower toward the upper side in the axial direction. A central opening portion of the shroud 75 is the intake port 70a of the impeller 70. The base portion 73 and the shroud 75 are connected to each other via the moving blades 74.

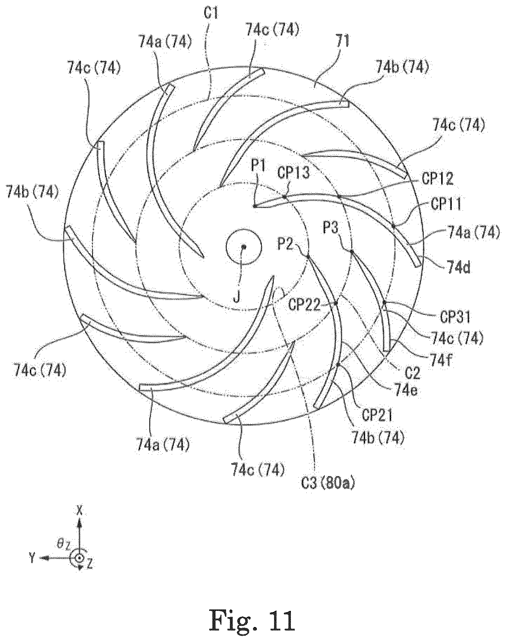

Fig. 11 is a plan view of the moving blades 74 of the impeller 70.

As illustrated in Fig. 11, the plurality of moving blades 74 are disposed along the circumferential direction (the θz direction) on the upper surface of the base portion 73. As illustrated in Fig. 1, the moving blades 74 are erected vertically along the axial direction from the upper surface of the base portion 73.

In the embodiment, three types of moving blades 74 are disposed such that the same types of moving blades are disposed at regular intervals in the circumferential direction. In the embodiment, the plurality of moving blades 74 include a plurality of (three) first moving blades 74a, a plurality of (three) second moving blades 74b, and a plurality of (six) third moving blades 74c. The three first moving blades 74a are disposed at regular intervals of 120° in the circumferential direction. Each second moving blade 74b is disposed between the first moving blades 74a that are adjacent to each other in the circumferential direction. The three second moving blade 74b are also disposed at regular intervals of 120° in the circumferential direction. Each third moving blade 74c is disposed between the first moving blade 74a and the second moving blade 74b that are adjacent to each other in the circumferential direction. The six third moving blade 74c are disposed at regular intervals of 60° in the circumferential direction.

Each moving blade 74 extends on the upper surface of the base portion 73 and has a curvature in a plane view (a XY plane view). One end of each moving blade 74 is positioned on an outer circumferential edge of the base portion 73. The other end of each moving blade 74 is positioned radially inward of the outer circumferential edge of the base portion 73.

That is, a radially outer end portion of any of the first moving blades 74a, the second moving blades 74b, and the third moving blades 74c is positioned on the outer circumferential edge of the base portion 73. Meanwhile, an end portion P1 of each first moving blade 74a that is on an inner circumferential side is positioned closest to the center of the base portion 73. An end portion P2 of each second moving blade 74b that is on the inner circumferential side is positioned radially outward of the end portion P1 of each first moving blade 74a. An end portion P3 of each third moving blade 74c that is on the inner circumferential side is positioned radially outward of the end portion P2 of each second moving blade 74b. According to this configuration, it is possible to reduce turbulent flow in the impeller 70 and thus an air blowing efficiency of the impeller 70 is improved.

Any of the first moving blades 74a, the second moving blades 74b, and the third moving blades 74c has a shape that is curved like a bow in a counterclockwise direction.

Each first moving blade 74a is formed of four arcs that are different in radius of curvature. A projecting blade surface 74d of each first moving blade 74a has three inflection points CP11, CP12, and CP13 in a longitudinal direction thereof.

Each second moving blade 74b is formed of three arcs that are different in radius of curvature. A projecting blade surface 74e of each second moving blade 74b has two inflection points CP21 and CP22 in a longitudinal direction thereof.

Each third moving blade 74c is formed of two arcs that are different in radius of curvature. A projecting blade surface 74f of each third moving blade 74c has one inflection point CP31 in a longitudinal direction thereof.

In the embodiment, the inflection point CP11 of each first moving blade 74a, the inflection point CP21 of each second moving blade 74b, and the inflection point CP31 of each third moving blade 74c are disposed on the same radius position C1 in the base portion 73. In addition, the radius of curvature of a portion of each first moving blade 74a that is disposed outward of the radial position C1, the radius of curvature of a portion of each second moving blade 74b that is disposed outward of the radial position C1, and the radius of curvature of a portion of each third moving blade 74c that is disposed outward of the radial position C1, are equal to each other.

Next, the inflection point CP12 of each first moving blade 74a, the inflection point CP22 of each second moving blade 74b, and the end portion P3 of each third moving blade 74c are disposed on the same radius position C2 in the base portion 73. In addition, the radius of curvature of a portion of each first moving blade 74a that is disposed between the radial position C1 and the radial position C2, the radius of curvature of a portion of each second moving blade 74b disposed between the radial position C1 and the radial position C2, and the radius of curvature of a portion of each third moving blade 74c that is disposed between the radial position C1 and the radial position C2, are equal to each other.

Next, the inflection point CP13 of each first moving blade 74a and the end portion P2 of each second moving blade 74b are disposed on the same radius position C3 in the base portion 73. In addition, the radius of curvature of a portion of each first moving blade 74a that is disposed between the radial position C2 and the radial position C3 and the radius of curvature of a portion of each second moving blade 74b disposed between the radial position C2 and the radial position C3 are equal to each other.

The radii of curvature of the blade surfaces 74d to 74f of the moving blades 74 (74a to 74c) in the embodiment are different for each radial region in the impeller 70. Meanwhile, portions of different types of moving blades 74 (the first moving blades 74a to third moving blades 74c) that belong to the same radial region are set to have the same radius of curvature.

In the embodiment, the radial position C3 coincides with the intake port 80a of the impeller housing 80 as seen in the axial direction. Accordingly, only a portion of each first moving blade 74a that is disposed closer to the inner circumferential side than the inflection point CP13 is disposed inward of the intake port 80a.

The impeller hub 72 includes a tube portion 72a that extends in the axial direction, a disc-shaped flange portion 72b that expands radially outwards from a lower portion of an outer circumferential surface of the tube portion 72a, and a plurality of projecting portions 72c that protrude upwards from an upper surface of the flange portion 72b. The tube portion 72a includes a tapered inclined surface portion 72d that becomes narrower toward an upper tip end portion.

The impeller hub 72 is attached to the impeller main body 71 by inserting the tube portion 72a into the through-hole 73a of the base portion 73 from the lower side. The tube portion 72a may be press-fitted into the through-hole 73a and may be fixed using a bonding agent or the like. The flange portion 72b of the impeller hub 72 supports the impeller main body 71 from the lower side. The projecting portions 72c on the flange portion 72b are fitted into recess portions 73c on the lower surface of the base portion 73. Since the projecting portions 72c are fitted into the recess portions 73c, a relative movement of the impeller main body 71 and the impeller hub 72 in the circumferential direction is suppressed.

Since the impeller hub 72 includes the flange portion 72b, it is possible to support the impeller main body 71 with the flange portion 72b over a wide area in the radial direction from below. Accordingly, it is possible to stably hold the impeller 70 and the stability at the time of highspeed rotation becomes high. That is, since it is possible to support the impeller main body 71 with the flange portion 72b over a wide area in the radial direction from below, it is possible to reduce vibration of the impeller 70 with respect to the shaft 31.

In the impeller 70, the inclined surface portion 72d of a tip end of the tube portion 72a of the impeller hub 72 and the inclined surface portion 73b of the base portion 73 are smoothly connected to each other in the vertical direction. The inclined surface portion 72d and the inclined surface portion 73b constitute an annular inclined surface 70b that guides fluid sucked via the intake port 70a of the impeller 70 to the outer side in the radial direction.

Since the impeller main body 71 and the impeller hub 72 constitute the annular inclined surface 70b, it is possible to increase the maximum height of the annular inclined surface 70b by increasing the length of the tube portion 72a (the inclined surface portion 72d) without increasing the height of the inclined surface portion 73b of the base portion 73. Accordingly, it is possible to realize the annular inclined surface 70b having a preferable shape while suppressing an increase in thickness of the base portion 73.

The impeller hub 72 is preferably made of metal. In this case, it is possible to firmly connect the shaft 31 and the impeller 70 to each other. Accordingly, it is possible to stably rotate the impeller 70 at a high speed. In addition, since it is possible to use a metal surface as the inclined surface portion 72d, it is possible to smooth a surface of an upper tip end of the annular inclined surface 70b.

The impeller 70 is fixed to the shaft 31 by fitting an upper end portion of the shaft 31 into the tube portion 72a of the impeller hub 72 from the lower side. As illustrated in Figs. 1 and 9, the impeller 70 connected to the shaft 31 is disposed inward of the annular protruding portion 66c of the second stationary blade member 61b. Therefore, the annular protruding portion 66c is disposed in the vicinity of an exhaust port 70c of the impeller 70.

The annular protruding portion 66c protrudes upwards from an upper end of the upper stationary blade supporting ring 66b. The annular protruding portion 66c is positioned radially outward of the impeller 70. That is, the stationary blade member 60 includes the annular protruding portion 66c that protrudes upwards and is positioned radially outward of the impeller 70. The annular protruding portion 66c guides exhaust gas discharged from the impeller 70 to the lower side together with an exhaust gas guiding portion 83 of the impeller housing 80, which will be described later. In the embodiment, an outer circumferential surface of the annular protruding portion 66c is an inclined surface 66e that is inclined downwards as it goes radially outwards. In other words, the annular protruding portion 66c includes the outer circumferential surface that is inclined downwards as it goes radially outwards. The outer circumferential surface of the annular protruding portion 66c has a curved surface-like shape that is smoothly curved outwards.

A lower end of the outer circumferential surface of the annular protruding portion 66c is smoothly connected to the outer circumferential surface of the cylindrical upper stationary blade supporting ring 66b. Therefore, the inclination angle of a lower end of the annular protruding portion 66c with respect to the horizontal direction is substantially 90°. An upper end of the annular protruding portion 66c is positioned radially outward of an outer circumferential end of the base portion 73 of the impeller 70 while being close to the outer circumferential edge. The upper end of the annular protruding portion 66c is positioned above the lower surface of the base portion 73 and is positioned below an outer end of the upper surface of the base portion 73.

In the air blower device 1 in the embodiment, since the annular protruding portion 66c has the above-described shape and is disposed as described above, air discharged from the impeller 70 can be smoothly guided downwards without turbulent flow. At a lower end of the exhaust port 70c of the impeller 70, air is discharged from the outer circumferential end of the base portion 73 in a substantially horizontal direction. In the embodiment, since the upper end of the annular protruding portion 66c is positioned below the upper surface of the base portion 73, discharged air does not collide with the annular protruding portion 66c and is guided along the outer circumferential surface of the annular protruding portion 66c. Accordingly, it is possible to effectively transport air. In addition, since the annular protruding portion 66c is provided, air discharged radially outwards from the exhaust port 70c is less likely to flow into an axial gap between the second stationary blade member 61b and the base portion 73.

### <Impeller Housing>

The impeller housing 80 is provided with the intake port 80a on an upper side thereof and has a cylindrical shape that becomes narrower toward the upper side in the axial direction. The impeller housing 80 includes an intake gas guiding portion 81 that is positioned at an opening end of the intake port 80a, an impeller housing main body portion 82 that accommodates the impeller 70, and the skirt-shaped exhaust gas guiding portion 83 that extends radially outwards and downwards from an outer circumferential edge of the impeller housing main body portion 82. That is, the impeller housing 80 accommodates the impeller 70 and includes the intake port 80a.

The impeller housing main body portion 82 has a sectional shape that conforms to the shroud 75 of the impeller 70. An inner surface (a lower surface) of the impeller housing main body portion 82 and an outer surface (an upper surface) of the shroud 75 face each other with a uniform interval provided therebetween.

The annular intake gas guiding portion 81 that protrudes radially inwards is positioned on an upper end portion of the impeller housing main body portion 82 that is on the inner circumferential side. As illustrated in Fig. 9, the intake gas guiding portion 81 covers an upper end surface 75b of the shroud 75 from above. A small-width gap extending in the radial direction is present between a lower surface of the intake gas guiding portion 81 and the upper end surface 75b of the shroud 75.

An outer circumferential end portion 82a of the impeller housing main body portion 82 is curved downwards around an outer circumferential end of the shroud 75. A small-width gap extending toward the upper side in the axial direction is present between an inner circumferential surface of the outer circumferential end portion 82a and an outer end surface of the shroud 75.

The exhaust gas guiding portion 83 includes a stepped portion 83a that is disposed on a radially inner side on a lower end surface and extends around the exhaust gas guiding portion in the circumferential direction. As illustrated in Fig. 9, the stepped portion 83a is fitted onto a stepped portion 65a of the outer circumferential ring 65 of the second stationary blade member 61b. An inner circumferential surface of the exhaust gas guiding portion 83 and the inner circumferential surface of the outer circumferential ring 65 are smoothly connected to each other in the vertical direction and constitute an outer circumferential wall surface of an exhaust gas flow path.

The inner circumferential surface of the exhaust gas guiding portion 83 and the outer circumferential surface of the annular protruding portion 66c of the second stationary blade member 61b that is positioned below the impeller 70 constitute an exhaust gas flow path 92 that guides exhaust gas discharged radially outwards from the impeller 70 to the lower side.

As illustrated in Fig. 9, the exhaust gas guiding portion 83 may include a guiding portion inner recess portion 83b and a guiding portion inner projecting portion 83c on the inner circumferential surface thereof. The guiding portion inner recess portion 83b is a portion of which an inner circumferential surface is curved inwards. The guiding portion inner projecting portion 83c is positioned below the guiding portion inner recess portion 83b and is a portion of which an inner circumferential surface is curved outwards. The distance between the inclined surface 66e and the inner circumferential surface of the exhaust gas guiding portion 83 becomes shortest in a region in which the guiding portion inner projecting portion 83c and the inclined surface 66e face each other. Here, the inclined surface 66e is the outer circumferential surface of the annular protruding portion 66c. Accordingly, the efficiency of the blower device 1 is improved. That is, when air is discharged radially outwards by the impeller 70, the air passes through a region in which the distance between the inclined surface 66e and the inner circumferential surface of the exhaust gas guiding portion 83 becomes shortest. In the region, since the sectional area of the flow path becomes locally small, static pressure becomes high and thus separation of air flow at the inner circumferential surface of the exhaust gas guiding portion 83 and the inclined surface 66e is less likely to occur. Accordingly, turbulent flow is less likely to be generated in the flow path configured between the inclined surface 66e and the inner circumferential surface of the exhaust gas guiding portion 83 and effective guidance in the flow path can be performed, so that the efficiency of the blower device 1 is improved.

As illustrated in Fig. 9, the exhaust gas flow path 92 is connected to the exhaust gas flow path 93 of the stationary blade member 60. As illustrated in Fig. 10, the exhaust gas flow path 93 of the stationary blade member 60 is configured of flow paths between the upper stationary blades 67a and flow paths between the lower stationary blades 67b. A connection portion between the exhaust gas flow path 93 and the outside is the exhaust port 95.

The exhaust port 95 is positioned below the circumferential edge portion of the impeller housing 80. In addition, the exhaust port 95 is positioned above the housing 20. Note that, the exhaust port 95 opens having a constant width in the vertical direction. The exhaust port 95 may have any configuration as long as an upper end thereof is positioned above an upper end of the housing 20. That is, a lower end of the exhaust port 95 may be positioned below the upper end of the housing 20.

In addition, the exhaust port 95 is positioned above the housing 20 and opens downwards along the circumferential direction. In the embodiment, the exhaust port 95 opens around the central axis. Accordingly, since the exhaust port 95 discharges air uniformly along the circumferential direction, the air discharging efficiency can be increased. In this case, a flow path up to an opening in the exhaust port 95 may be partitioned by the upper stationary blades 67a and the lower stationary blades 67b. Note that, the exhaust port 95 may intermittently open along the circumferential direction.

### <Air Blowing Operation>

The blower device 1 in the embodiment draws air into the impeller 70 via the intake port 80a as illustrated in Fig. 1 by rotating the impeller 70 with the motor 10 and discharges the air radially outwards via the air flow path in the impeller 70. Exhaust gas discharged from the impeller 70 flows into a region between the upper stationary blades 67a via the exhaust gas flow path 92. The upper stationary blades 67a rectify the exhaust gas and discharge the exhaust gas downwards. The lower stationary blades 67b cause the exhaust gas to flow in a downward direction and guide the exhaust gas radially outwards. Thereafter, the exhaust gas is discharged to the outside of the blower device 1 from the exhaust port 95.

A portion of the exhaust gas discharged downwards from the exhaust port 95 flows downwards along an outer circumferential surface of the housing 20 of the motor 10. In addition, the other portion of the exhaust gas discharged from the exhaust port 95 flows into the motor 10 via the through-holes 25 and 26 provided in the housing 20.

A portion of the exhaust gas flowing into the motor 10 via the through-holes 25 flows to the air flow paths FP between the stator 40 and the housing 20 illustrated in Fig. 6. In the air flow paths FP, the exhaust gas flows downwards. In the air flow paths FP, as illustrated in Fig. 4, the outer circumferential surfaces of the linear portions 41c (the stator core 41) are exposed and are cooled by the exhaust gas. The plurality of plate-shaped portions 45 are positioned in the air flow paths FP and rectify the exhaust gas flowing in the air flow paths FP. According to this configuration, the air blowing efficiency with respect to exhaust gas flowing in the air flow paths FP is improved. The exhaust gas flowing in the air flow paths FP is discharged downwards via the lower opening portions 24 of the motor 10.

A portion of the exhaust gas flowing into the motor 10 via the through-holes 26 flows into the stator 40 via the gaps CL as illustrated in Fig. 6. The first side end surfaces 43b, the second side end surfaces 43c, and the inclined members 46 constituting the gaps CL guide exhaust gas passing through the gaps CL toward side surfaces of the coils 42. That is, it is possible to reduce a possibility that the exhaust gas passing through the gaps CL collide with the upper surfaces of the arc portions 41d and a possibility of a decrease in air discharging efficiency in comparison with a case where the inclined members 46 are not provided. According to this configuration, it is possible to effectively cool the coils 42 which are heat generating portions of the motor 10. The exhaust gas flows downwards in the vicinity of the coils 42 and is discharged downwards via the through-holes 22a on the lower surface of the motor 10.

In the blower device 1 of the embodiment, the annular exhaust port 95 that extends around the axis is disposed above the motor 10. Accordingly, it is not necessary to provide an air flow path member for air discharging radially outward of the motor 10. As a result, the motor 10 with a larger diameter can be used and thus it is possible to improve the air blowing efficiency without increasing the diameter of the blower device 1. Alternatively, it is possible to reduce the size of the blower device 1 while maintaining the air blowing efficiency.

Note that, the exhaust port 95 may be disposed above the stator 40. Since a relationship between the performance and the diameter of the motor 10 is determined by the size of the stator 40, if the exhaust port 95 is disposed above at least the stator 40, it is possible to dispose the exhaust port 95 inside the diameter of the motor 10.

In addition, in the embodiment, the blower device 1 includes the three gaps CL and the three air flow paths FP. According to this configuration, it is possible to effectively cool the stator core 41 or the coils 42 by using air flowing radially inwards from the gaps CL and it is possible to cool the stator core 41 by using air flowing in the axial direction through the air flow paths FP.

### <Modification Example 1>

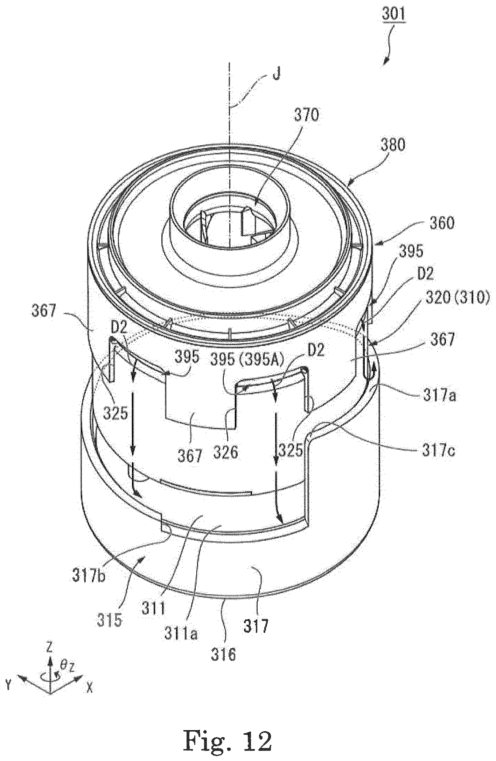

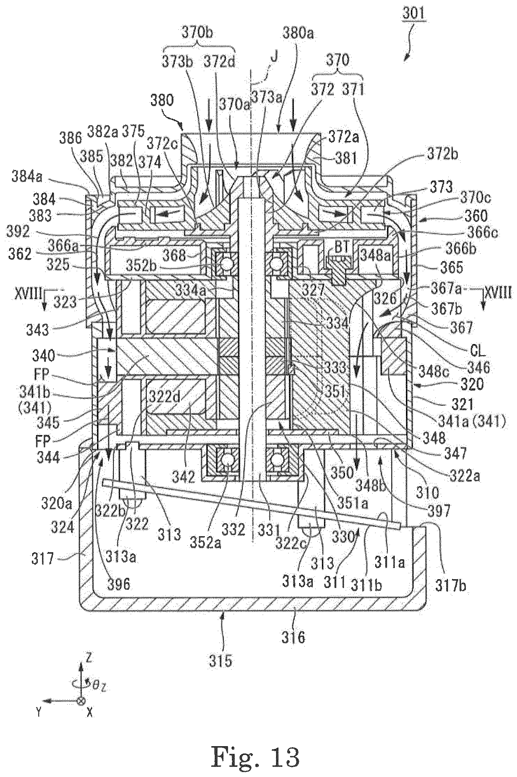

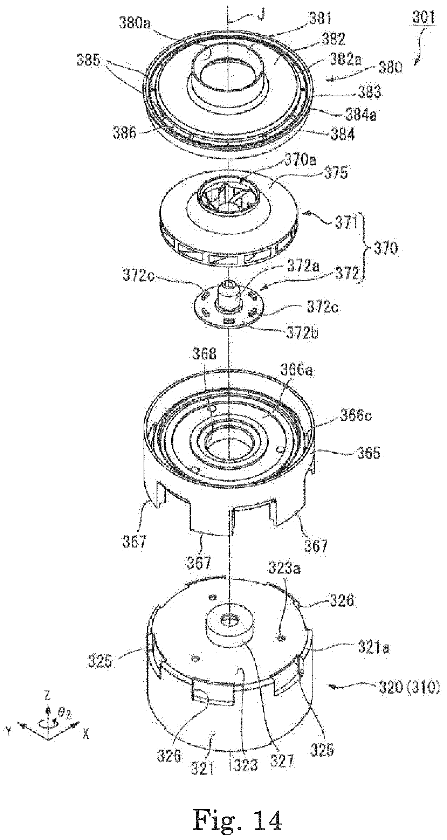

Fig. 12 is a perspective view of a blower device 301 in Modification Example 1. Fig. 13 is a sectional view illustrating the blower device 301 in the present modification example. Fig. 14 is an exploded perspective view of the blower device 301 in the present modification example in which a control board 311 and a board case 315 are not shown. Note that, the same constituent elements as those in the above-described embodiment are given the same reference numerals and description thereof will be omitted.

As illustrated in Figs. 12 to 14, the blower device 301 includes a motor 310, an impeller 370, an exhaust gas guiding member (the stationary blade member) 360, an impeller housing 380, the control board 311, the board case 315, and a third exhaust port (the exhaust port) 395 that is positioned between the exhaust gas guiding member 360 and the motor 310.

The exhaust gas guiding member 360 is attached to an upper side (the +Z side) of the motor 310. The impeller housing 380 is attached to an upper side of the exhaust gas guiding member 360. The impeller 370 is accommodated between the exhaust gas guiding member 360 and the impeller housing 380. The impeller 370 is attached to the motor 310 such that the impeller 370 can rotate around the central axis J. The control board 311 and the board case 315 that covers the control board 311 are attached to a lower side (the -Z side) of the motor 310.

### [Motor]

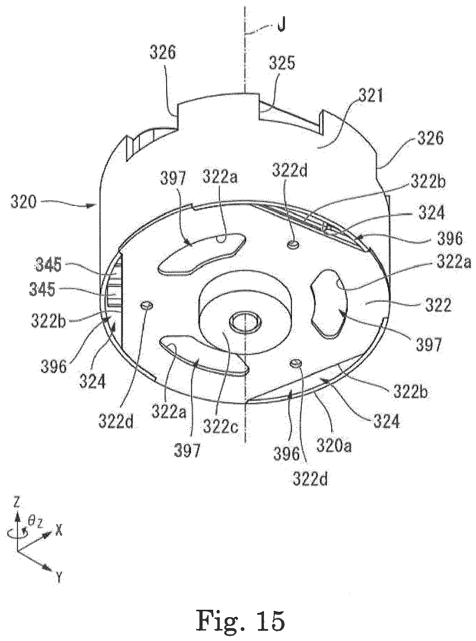

Fig. 15 is a perspective view of the motor 310 in the modification example as seen from below.

As illustrated in Figs. 13 and 15, the motor 310 includes a housing 320, a lower cover 322, a rotor 330 that includes a shaft 331, a stator 340, a sensor board 350, a lower bearing 352a, and an upper bearing 352b.

The housing 320 is a covered cylindrical container that accommodates the rotor 330 and the stator 340. The housing 320 includes a cylindrical circumferential wall 321, an upper cover portion 323 that is positioned on an upper end of the circumferential wall 321, and an upper bearing holding portion 327 that is positioned on the central portion of the upper cover portion 323. The stator 340 is fixed to an inner surface of the housing 320. The upper bearing holding portion 327 has a tubular shape that protrudes upwards from the central portion of the upper cover portion 323. The upper bearing holding portion 327 holds the upper bearing 352b inside thereof.

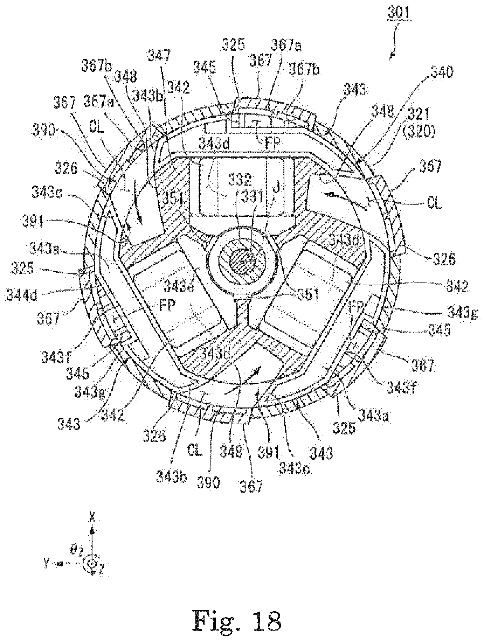

As illustrated in Fig. 14, a plurality of through-holes 325 and 326 are provided on the circumferential wall 321 of the housing 320 and an edge portion 321a of the upper cover portion 323. Three through-holes 325 and three through-holes 326 are alternately positioned around the axis (refer to Fig. 18). The through-holes 325 and 326 extend from an upper portion of the circumferential wall 321 to reach an outer edge portion of the upper cover portion 323. The through-holes 325 and 326 penetrate the circumferential wall 321 in the radial direction. In addition, through-holes 325 and 326 penetrate the vicinity of a radially outer edge portion of the upper cover portion in the vertical direction.

The lower cover 322 is attached to an opening portion of the housing 320 that is on the lower side (the -Z side). A lower bearing holding portion 322c having a tubular shape that protrudes downwards from a lower surface of the lower cover 322 is provided on the central portion of the lower cover 322. The lower bearing holding portion 322c holds the lower bearing 352a.

As illustrated in Fig. 15, on the lower cover 322, three arc-shaped through-holes 322a, each of which has a width in the radial direction, are provided around the axis. An outer circumferential end of the lower cover 322 is provided with three cut-out portions 322b that are obtained by linearly cutting an outer circumferential portion of the lower cover 322. Gaps between an opening end 320a of the housing 320 that is on the lower side and the cut-out portions 322b are lower opening portions 324 of the motor 310.

As illustrated in Fig. 13, the rotor 330 includes the shaft 331, a rotor magnet 333, a lower magnet fixing member 332, and an upper magnet fixing member 334. The rotor magnet 333 has a cylindrical shape that surrounds the shaft 331 around the axis (a θz direction) from the outer side in the radial direction. Each of the lower magnet fixing member 332 and the upper magnet fixing member 334 has a cylindrical shape of which the diameter is the same as that of the rotor magnet 333. The lower magnet fixing member 332 and the upper magnet fixing member 334 are attached to the shaft 331 with the rotor magnet 333 being interposed therebetween in the axial direction. An upper portion of the upper magnet fixing member 334 in a central axis direction is provided with a small-diameter portion 334a of which the diameter is smaller than that of the lower side (the rotor magnet 333 side).

The shaft 331 is supported by the lower bearing 352a and the upper bearing 352b such that the shaft 331 can rotate around the axis (the θz direction). The impeller 370 is attached to an end portion of the shaft 331 that is on the upper side (the +Z side). The impeller 370 integrally rotates with the shaft 331 around the axis.

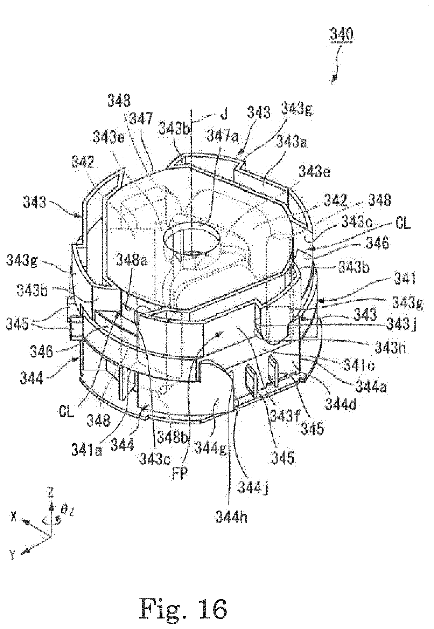

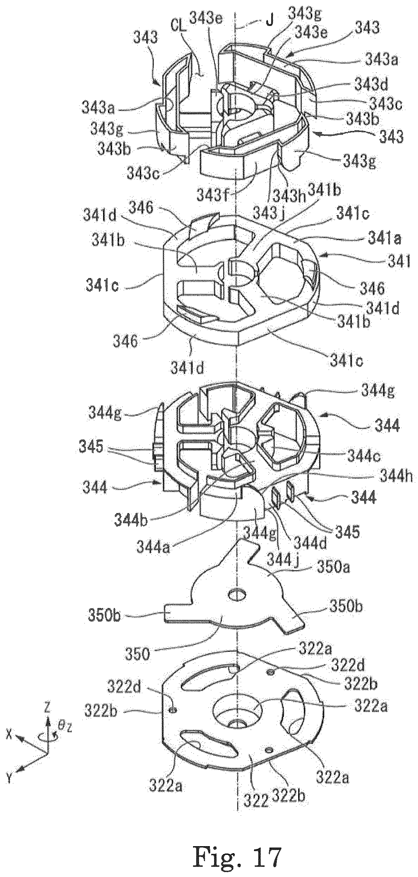

Fig. 16 is a perspective view of the stator 340 in the modification example. Fig. 17 is an exploded perspective view illustrating the stator 340, the sensor board 350, and the lower cover 322. Fig. 18 is a plan sectional view of the motor 310.

The stator 340 is positioned radially outward of the rotor 330. The stator 340 surrounds the rotor 330 around the axis (the θz direction). As illustrated in Figs. 16 and 17, the stator 340 includes a stator core 341, a plurality of (three) upper insulators 343, a plurality of (three) lower insulators 344, and coils 342. In addition, as illustrated in Fig. 16, the stator 340 includes a molded portion 347 in which the coils 342 are molded.

As illustrated in Fig. 17, the stator core 341 includes a core back portion 341a and a plurality of (three) tooth portions 341b. The core back portion 341a has a ring-like shape that extends around the central axis. The core back portion 341a has a configuration in which three linear portions 341c and three arc portions 341d are alternately positioned around the axis. Each tooth portion 341b extends radially inwards from an inner circumferential surface of each linear portion 341c. The tooth portions 341b are disposed at regular intervals in the circumferential direction. An inclined member 346 that guides exhaust gas inwards in the stator 340 is disposed on an upper surface of each arc portion 341d of the core back portion 341a. Each inclined member 346 has a shape in which the thickness decreases toward the inner side from the outer side in the radial direction.

The upper insulators 343 are insulating members that cover a portion of an upper surface and a side surface of the stator core 341. The upper insulators 343 are provided to respectively correspond to the three tooth portions 341b. Each upper insulator 343 includes an upper outer circumferential wall portion 343a that is positioned above the core back portion 341a, an upper inner circumferential wall portion 343e that is positioned above a tip end of the tooth portion 341b, and an upper insulating portion 343d that connects the upper outer circumferential wall portion 343a and the upper inner circumferential wall portion 343e to each other in the radial direction and is positioned above a portion of the tooth portion 341b around which a coil is wound.

The lower insulators 344 are insulating members that cover a portion of a lower surface and the side surface of the stator core 341. The lower insulators 344 are provided to respectively correspond to the three tooth portions 341b. Each lower insulator 344 includes a lower outer circumferential wall portion 344a that is positioned below the core back portion 341a, a lower inner circumferential wall portion 344c that is positioned below the tip end of the tooth portion 341b, and a lower insulating portion 344b that connects the lower outer circumferential wall portion 344a and the lower inner circumferential wall portion 344c to each other in the radial direction and is positioned below the portion of the tooth portion 341b around which the coil is wound.

The upper insulators 343 and the lower insulators 344 are disposed such that the tooth portions 341b of the stator core 341 are interposed therebetween in the vertical direction. The coils 342 are wound around the tooth portions 341b covered by the upper insulating portions 343d of the upper insulators 343 and the lower insulating portions 344b of the lower insulators 344.

The three upper outer circumferential wall portions 343a positioned above the core back portion 341a of the stator core 341 surround the coils 342 from the outer side in the radial direction at a position above the stator core 341. Each upper outer circumferential wall portion 343a includes a first side end surface 343b and a second side end surface 343c at opposite ends in the circumferential direction. Each first side end surface 343b is an inclined surface that is inclined with respect to the radial direction and that faces the outer side in the radial direction. Each second side end surface 343c is an inclined surface that is inclined with respect to the radial direction and that faces the inner side in the radial direction.

A portion of an outer circumferential surface of each upper outer circumferential wall portion 343a that is positioned above the linear portion 341c is provided with a flat surface 343f and an upper inclined projecting portion 343g that are arranged in the circumferential direction. Each flat surface 343f is positioned on the second side end surface 343c side and each upper inclined projecting portion 343g is positioned on the first side end surface 343b side. An arc-shaped surface that is disposed along an inner circumferential surface of the housing 320 is provided between each flat surface 343f and each second side end surface 343c. In addition, an outer circumferential surface of each upper inclined projecting portion 343g is an arc-shaped surface along the inner circumferential surface of the housing 320.

Each flat surface 343f is aligned with an outer circumferential surface of the linear portion 341c of the stator core 341 and extends in the axial direction.

Each upper inclined projecting portion 343g protrudes radially outwards with respect to each flat surface 343f. In addition, each upper inclined projecting portion 343g protrudes axially downwards and covers a portion of the linear portion 341c of the stator core 341 from the outer side in the radial direction. A side surface of each upper inclined projecting portion 343g that is adjacent to the flat surface 343f is provided with an axial flat surface 343j and an upper guiding inclined surface 343h that is positioned below the axial flat surface 343j. Each upper guiding inclined surface 343h is inclined in a direction such that the upper guiding inclined surface 343h gradually faces the lower side as it goes downwards. The axial flat surfaces 343j and the upper guiding inclined surfaces 343h are smoothly connected to each other. An inclination direction of each upper guiding inclined surface 343h is the same as the rotation direction of the impeller. According to this configuration, a swirling component of exhaust gas flowing in the air flow paths FP is smoothly oriented toward the lower side by the upper guiding inclined surfaces 343h and lower guiding inclined surfaces 344h. Accordingly, it is possible to increase the air discharging efficiency with respect to exhaust gas flowing in the air flow paths FP.

As illustrated in Fig. 18, the upper outer circumferential wall portions 343a that are adjacent to each other in the circumferential direction are separated from each other with a predetermined interval provided therebetween. The first side end surface 343b of one upper outer circumferential wall portion 343a of the adjacent upper outer circumferential wall portions 343a and the second side end surface 343c of the other upper outer circumferential wall portion 343a are disposed to face each other in the circumferential direction. The degree to which each first side end surface 343b is inclined with respect to the radial direction and the degree to which each second side end surface 343c is inclined with respect to the radial direction are different from each other. More specifically, the width of an opening portion 390, which is positioned close to the radially outer side of a gap CL formed between the adjacent upper outer circumferential wall portions 343a, in the circumferential direction is smaller than the width of an opening portion 391, which is positioned close to the radially inner side, in the circumferential direction.

The inclined members 346 disposed on the core back portion 341a are positioned below the gaps CL (refer to Fig. 17). The inclined members 346 are interposed between the first side end surfaces 343b and the second side end surfaces 343c. The gaps CL are positioned inward of the through-holes 326 of the housing 320. The through-holes 326 and the gaps CL serve as air flow paths that guide exhaust gas flowing from the outside of the housing 320 into the stator 340. An inclination direction (a direction from the outer side to the inner side in the radial direction) of each gap CL with respect to the radial direction as seen from above coincides with a flow direction of exhaust gas discharged from the exhaust gas guiding member 360 in the circumferential direction. That is, the inclination direction coincides with a rotation direction of the impeller 370.

As illustrated in Fig. 18, since the opening portions 390 that are positioned close to the inlets of the gaps CL are relatively larger than the opening portions 391 that are positioned close to the outlets, a larger amount of exhaust gas can be sucked through the through-holes 326 and since the width of the opening portions 391 that are positioned close to the outlets is relatively small, air discharged through the gaps CL can be caused to flow toward a target position (the coils 342) more accurately.

As illustrated in Fig. 17, the three lower outer circumferential wall portions 344a positioned below the core back portion 341a surround the coils 342 from the outer side in the radial direction at a position below the stator core 341. Although a gap is provided between the lower outer circumferential wall portions 344a that are adjacent to each other in the circumferential direction, the lower outer circumferential wall portions 344a may be in contact with each other in the circumferential direction.

A portion of an outer circumferential surface of each lower outer circumferential wall portion 344a that is positioned below the linear portion 341c of the core back portion 341a is provided with a flat surface 344d and a lower inclined projecting portion 344g that are arranged in the circumferential direction. An arc-shaped surface that is disposed along the inner circumferential surface of the housing 320 is provided on each of the opposite sides of a region, in which the flat surface 344d and the lower inclined projecting portion 344g are provided, in the circumferential direction.

Each flat surface 344d is aligned with an outer circumferential surface of the linear portion 341c and extends in the axial direction.

Each lower inclined projecting portion 344g protrudes radially outwards with respect to each flat surface 344d. In addition, each lower inclined projecting portion 344g protrudes axially upwards and covers a portion of the linear portion 341c of the stator core 341. A side surface of each lower inclined projecting portion 344g that is adjacent to the flat surface 344d is provided with an axial flat surface 344j and the lower guiding inclined surface 344h that is positioned above the axial flat surface 344j. Each lower guiding inclined surface 344h is inclined in a direction such that the lower guiding inclined surface 344h gradually faces the upper side as it goes upwards. The axial flat surfaces 344j and the lower guiding inclined surfaces 344h are smoothly connected to each other. An inclination direction of each lower guiding inclined surface 344h is the same as the rotation direction of the impeller.

As illustrated in Fig. 16, each of the lower inclined projecting portions 344g of the lower insulators 344 and each of the upper inclined projecting portions 343g of the upper insulators 343 are disposed to be offset from each other in the circumferential direction and the axial direction with a gap provided therebetween. Each lower guiding inclined surface 344h and each upper guiding inclined surface 343h face each other with the gap provided therebetween. The gap between each lower guiding inclined surface 344h and each upper guiding inclined surface 343h serves as the air flow path FP between the stator 340 and the housing 320. A swirling component of exhaust gas flowing in the air flow paths FP is smoothly oriented toward the lower side by the upper guiding inclined surfaces 343h and the lower guiding inclined surfaces 344h. Accordingly, it is possible to increase the air discharging efficiency with respect to exhaust gas flowing in the air flow paths FP.

A plurality of (in the drawing, two) plate-shaped portions 345 that extend in the axial direction are provided on each flat surface 344d. The plate-shaped portions 345 are erected to be substantially perpendicular to each flat surface 344d. A tip end of each plate-shaped portion 345 that is on the outer side in the radial direction reaches the inner circumferential surface of the housing 320. The plate-shaped portions 345 partition a region between the lower outer circumferential wall portions 344a and the housing 320 into a plurality of regions in the circumferential direction.

As illustrated in Fig. 16, the molded portion 347 is molded to fill a region surrounded by the upper outer circumferential wall portions 343a of the upper insulators 343 and the lower outer circumferential wall portions 344a of the lower insulators 344 in the stator 340. The molded portion 347 extends from upper ends of the upper insulators 343 to reach lower ends of the lower insulators 344 in the axial direction. In addition, the molded portion 347 is provided with a through-hole 347a through which the rotor 330 passes. The molded portion 347 firmly supports the coils 342 by surrounding the coils 342 and integrally holds the upper insulators 343, the lower insulators 344, the stator core 341, and the sensor board 350.

An outer circumferential surface of the molded portion 347 is provided with three recess groove-shaped exhaust gas guiding holes 348 that extends from an upper portion to reach a lower end. An intermediate portion of each recess groove-shaped exhaust gas guiding hole 348 in the vertical direction is covered by the core back portion 341a of the stator core 341. As illustrated in Fig. 13, the exhaust gas guiding holes 348 open radially outwards via upper openings 348a that are positioned above the core back portion 341a. The exhaust gas guiding holes 348 include inclined surfaces 348c that are smoothly inclined downwards being disposed radially inward of the upper opening 348a. In addition, the exhaust gas guiding holes 348 open downwards via lower openings 348b that are positioned on a lower end surface of the molded portion 347. The lower openings 348b are positioned right above the through-holes 322a of the lower cover 322.

As illustrated in Fig. 16, the upper openings 348a of the exhaust gas guiding holes 348 respectively face the three gaps CL between the first side end surfaces 343b and the second side end surfaces 343c of the upper insulators 343. As illustrated in Fig. 18, the width of the exhaust gas guiding holes 348 is the same as the width of the opening portions 391 that are positioned radially inward of the gaps CL. In addition, as illustrated in Fig. 13, the exhaust gas guiding holes 348 open from the outer circumferential surface of the molded portion 347 and extend downwards. The width of the exhaust gas guiding holes 348 and the width of the opening portions 391 are not necessarily the same as each other and may be different from each other.

Exhaust gas discharged radially inwards in the stator 340 via the gaps CL is guided into the exhaust gas guiding holes 348 from the upper opening 348a and a flow direction thereof is oriented downwards along the inclined surfaces 348c. Furthermore, the exhaust gas passes through the exhaust gas guiding holes 348 and is discharged to a position below the stator 340 via the lower openings 348b. Since the molded portion 347 is provided with the exhaust gas guiding holes 348, exhaust gas flowing between the coils 342 can be smoothly discharged downwards without causing turbulent flow and thus it is possible to increase the air discharging efficiency. Note that, in a case where the stator 340 does not include the molded portion 347, a member provided with the exhaust gas guiding hole 348 may be disposed between the coils 342. Note that, each lower openings 348b may have such a shape that the sectional area of the flow path increases toward the lower side. According to this configuration, air passing through the exhaust gas guiding holes 348 more smoothly flows downwards and thus it is possible to increase the air discharging efficiency.

As illustrated in Figs. 13 and 17, the sensor board 350 is disposed between the stator 340 and the lower cover 322. The sensor board 350 includes a circular ring-shaped main body portion 350a and three protruding portions 350b that protrude outwards in a direction oblique to the radial direction from an outer circumferential edge of the main body portion 350a. The main body portion 350a includes a through hole into which the shaft 331 is inserted. The sensor board 350 is fixed to the lower insulators 344.

At least three rotation sensors 351 are mounted on the sensor board 350. Each rotation sensor 351 is, for example, a hall element. The sensor board 350 may be electrically connected with the coils 342. In this case, a drive circuit that outputs a drive signal with respect to the coils 342 may be mounted on the sensor board 350.

The rotation sensors 351 have the same configuration as the rotation sensors 51 in the above-described embodiment. That is, as illustrated in Fig. 18, each rotation sensor 351 is disposed being interposed between tip end portions of the lower inner circumferential wall portions 344c that are adjacent to each other in the circumferential direction.

As illustrated in Fig. 15, the lower cover 322 is attached to the opening end 320a of the housing 320 that accommodates the stator 340 and the sensor board 350. As illustrated in Fig. 13, at least a portion of the three through-holes 322a of the lower cover 322 is positioned radially outward of an outer circumferential end of the main body portion 350a of the sensor board 350. The through-holes 322a serve as second exhaust ports 397 through which exhaust gas passing through the exhaust gas guiding holes 348 of the molded portion 347 is discharged toward a position below the motor 310.

The cut-out portions 322b on the outer circumferential portion of the lower cover 322 are disposed to substantially coincide with the linear portions 341c of the stator core 341, the flat surfaces 343f of the upper insulators 343, and the flat surfaces 344d of the lower insulators 344 as seen in the axial direction. As illustrated in Fig, 13, the lower opening portions 324 of a lower surface of the motor 310 serve as first exhaust ports 396 through which exhaust gas passing through the air flow paths FP between the stator 340 and the housing 320 is discharged.

### [Exhaust Gas Guiding Member, Impeller, and Impeller Housing]

Next, the exhaust gas guiding member 360, the impeller 370, and the impeller housing 380 will be described.

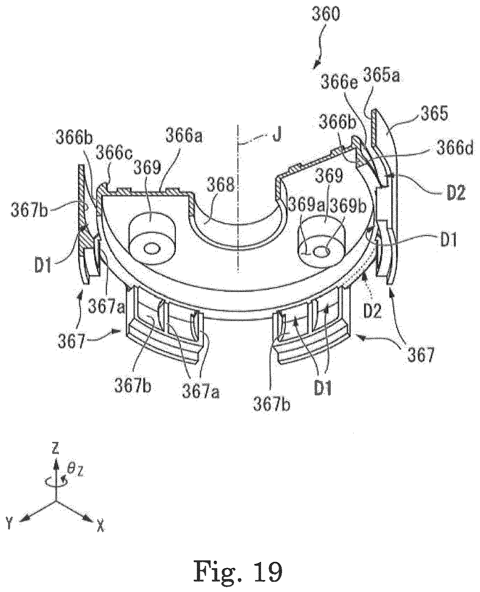

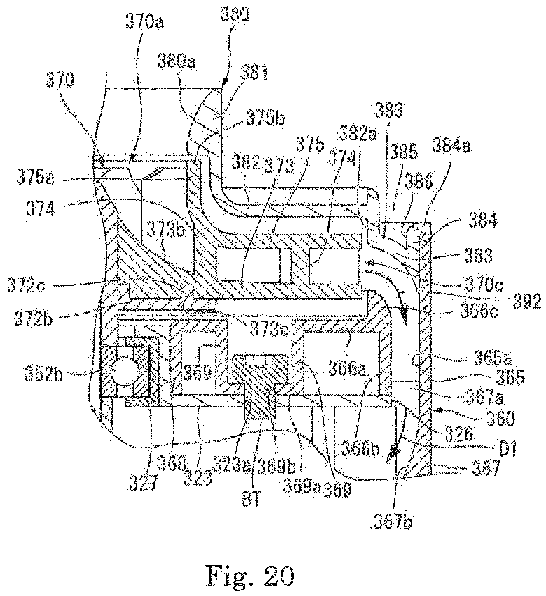

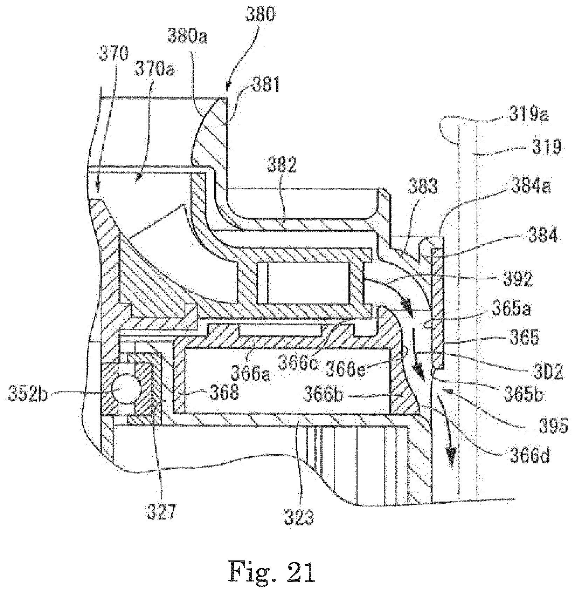

Fig. 19 is a partial sectional perspective view of the exhaust gas guiding member 360 as seen from below. Figs. 20 and 21 are enlarged sectional view partially illustrating the impeller 370, the exhaust gas guiding member 360, and the impeller housing 380. Note that, Fig. 20 illustrates a first guidance path D1 which will be described later and Fig. 21 illustrates a second guidance path D2 which will be described later.

### <Exhaust Gas Guiding Member>

The exhaust gas guiding member (the stationary blade member) 360 is attached to the housing 320 of the motor 310. The exhaust gas guiding member 360 includes a round flat ring-shaped supporting body 366a, an annular protruding portion 366c that protrudes upwards from an outer circumferential edge of the supporting body 366a, a cylindrical partition wall ring (the stationary blade supporting ring) 366b that extends downwards from the outer circumferential edge of the supporting body 366a, an outer circumferential tube portion 365 that surrounds the partition wall ring 366b from the outer side in the radial direction, and a plurality of (in the drawing, six) inward guiding portions 367 that extend downwards from a lower end of the outer circumferential tube portion 365. That is, the exhaust gas guiding member 360 is positioned outward of the partition wall ring 366b.

As illustrated in Fig. 19, the supporting body 366a includes an attachment ring 368 that extends downwards from a lower surface of a central portion thereof and three columnar projecting portions 369 that protrude downwards from a lower surface of the supporting body 366a.

The three columnar projecting portions 369 have the same diameter and height and are disposed at regular intervals of 120° in the circumferential direction. In the modification example, the columnar projecting portions 369 are hollow and each columnar projecting portion 369 includes a through-hole 369b that penetrates the center of a lower end surface 369a in the axial direction.

As illustrated in Fig. 20, the upper bearing holding portion 327 of the housing 320 is inserted into the attachment ring 368 of the exhaust gas guiding member 360. A lower surface of the attachment ring 368 of the exhaust gas guiding member 360 and the lower end surfaces 369a of the columnar projecting portions 369 come into contact with an upper surface of the upper cover portion 323 of the housing 320. The exhaust gas guiding member 360 and the motor 310 are fastened to each other by the bolts BT that are inserted into the through-holes 369b of the columnar projecting portions 369 and screw holes 323a of the upper cover portion 323.

The partition wall ring 366b and the outer circumferential tube portion 365 face each other in the radial direction. A gap between the partition wall ring 366b and the outer circumferential tube portion 365 constitutes the first guidance paths D1 through which exhaust gas is guided into the motor 310 and the second guidance paths D2 through which exhaust gas is discharged to an outer circumferential portion of the motor 310. The first guidance paths D1 are positioned at positions at which the inward guiding portions 367 are provided and the second guidance paths D2 are positioned between the inward guiding portions 367 in the circumferential direction. In the modification example, six first guidance paths D1 and six second guidance paths D2 are provided along the circumferential direction.

As illustrated in Fig. 12, the plurality of inward guiding portions 367 are respectively fitted into the through-holes 325 or the through-holes 326 of the housing 320. As illustrated in Figs. 19 and 20, outer circumferential surfaces of the inward guiding portions 367 are aligned with an outer circumferential surface of the outer circumferential tube portion 365 and extends in the axial direction. An inner circumferential surface 367b of each inward guiding portion 367 is an inclined surface that is inclined radially inwards as it goes downwards. An inner side of each of the inner circumferential surfaces 367b of the inward guiding portions 367 guides exhaust gas discharged from the impeller 370 toward the through-holes 325 and 326, which are on the inner side in the radial direction, as the first guidance path D1. In addition, each of the inner circumferential surfaces 367b of the inward guiding portions 367 is provided with a plurality of stationary blades 367a each of which has a rib-like shape and extends in the vertical direction. The stationary blades 367a connect the partition wall ring 366b and the inward guiding portions 367 to each other in the radial direction. That is, the partition wall ring (the stationary blade supporting ring) 366b supports the plurality of stationary blades 367a. Exhaust gas passing through the first guidance paths D1 is effectively guided to the through-holes 325 and 326 being rectified between the stationary blades 367a. Note that, the stationary blades 367a may be inclined with respect to the rotation direction of the impeller 370. In this case, exhaust gas with a swirling component in the rotation direction of the impeller 370 can be effectively guided to the through-holes 325 and 326.

As illustrated in Fig. 19, the second guidance paths D2, through each of which exhaust gas discharged from the impeller 370 is guided radially outwards and is discharged to a position outside the motor 310, are provided between the inward guiding portions 367 in the circumferential direction. As illustrated in Fig. 21, the second guidance paths D2 are positioned between an outer circumferential surface 366e of the partition wall ring 366b and an inner circumferential surface 365a of the outer circumferential tube portion 365. A lower end of each second guidance path D2 is provided with a third exhaust port 395. Exhaust gas passing through the second guidance path D2 is oriented downwards and is discharged to a position outside the motor 310 through the third exhaust port 395. The exhaust gas flows between an outer circumferential surface of the motor 310 and an inner circumferential surface 319a of a casing 319 accommodating the motor 310 and is discharged through a final exhaust port 317b, which will be described later (refer to Fig. 13), in the end.

The outer circumferential surface 366e of the partition wall ring 366b is provided with an inner inclined portion 366d that protrudes radially outwards as it goes downwards. Meanwhile, a lower end of the inner circumferential surface 365a of the outer circumferential tube portion 365 is provided with an outer inclined portion 365b at which the thickness of the outer circumferential tube portion 365 becomes small. Since the inner inclined portion 366d and the outer inclined portion 365b are provided, the second guidance path D2 moves radially outwards as it goes downwards with the width thereof in the radial direction being maintained. In the second guidance path D2, the sectional area in a plane perpendicular to the axial direction gradually increases toward the third exhaust ports 395. Therefore, it is possible to reduce an exhaust sound that is generated when air is discharged from the third exhaust ports 395. The air discharging efficiency when air is discharged from the third exhaust ports is improved.

### <Impeller>

The impeller 370 discharges fluid that is sucked via an intake port 370a, which opens upwards, radially outwards via an internal flow path. The impeller 370 includes an impeller main body 371 and an impeller hub 372.

The impeller main body 371 includes a base portion 373, a plurality of moving blades 374, and a shroud 375. The base portion 373 has a disk-like shape and includes a through-hole 373a that penetrates a central portion thereof in the axial direction. A portion of the base portion 373 that is in the vicinity of the through-hole 373a is a conical surface-shaped inclined surface portion 373b that protrudes upwards. Each of the moving blades 374 is a plate-shaped member that extends from the inner side to the outer side in the radial direction on an upper surface of the base portion 373 and is curved in the circumferential direction. The moving blades 374 are disposed being erected along the axial direction. The shroud 375 has a cylindrical shape that becomes narrower toward the upper side in the axial direction. A central opening portion of the shroud 375 is the intake port 370a of the impeller 370. The base portion 373 and the shroud 375 are connected to each other via the moving blades 374. The moving blades 374 have the same configuration as the moving blades 74 in the above-described embodiment.

The impeller hub 372 includes a tube portion 372a that extends in the axial direction, a disc-shaped flange portion 372b that expands radially outwards from a lower portion of an outer circumferential surface of the tube portion 372a, and a plurality of projecting portions 372c that protrude upwards from an upper surface of the flange portion 372b. The tube portion 372a includes a tapered inclined surface portion 372d that becomes narrower toward an upper tip end portion.

The impeller hub 372 is attached to the impeller main body 371 by inserting the tube portion 372a into the through-hole 373a of the base portion 373 from the lower side. The tube portion 372a may be press-fitted into the through-hole 373a and may be fixed using a bonding agent or the like. The flange portion 372b of the impeller hub 372 supports the impeller main body 371 from the lower side. The projecting portions 372c on the flange portion 372b are fitted into recess portions 373c on the lower surface of the base portion 373. Since the projecting portions 372c are fitted into the recess portions 373c, a relative movement of the impeller main body 371 and the impeller hub 372 in the circumferential direction is suppressed.

Since the impeller hub 372 includes the flange portion 372b, it is possible to support the impeller main body 371 with the flange portion 372b over a wide area in the radial direction from below. Accordingly, it is possible to stably hold the impeller 370 and the stability at the time of highspeed rotation becomes high.

In the impeller 370, the inclined surface portion 372d of a tip end of the tube portion 372a of the impeller hub 372 and the inclined surface portion 373b of the base portion 373 are smoothly connected to each other in the vertical direction. The inclined surface portion 372d and the inclined surface portion 373b constitute an annular inclined surface 370b that guides fluid sucked via the intake port 370a of the impeller 370 to the outer side in the radial direction.

Since the impeller main body 371 and the impeller hub 372 constitute the annular inclined surface 370b, it is possible to increase the maximum height of the annular inclined surface 370b by increasing the length of the tube portion 372a (the inclined surface portion 372d) without increasing the height of the inclined surface portion 373b of the base portion 373. Accordingly, it is possible to realize the annular inclined surface 370b having a preferable shape while suppressing an increase in thickness of the base portion 373.

The impeller hub 372 is preferably made of metal. In this case, it is possible to firmly connect the shaft 331 and the impeller 370 to each other. Accordingly, it is possible to stably rotate the impeller 370 at a high speed. In addition, since it is possible to use a metal surface as the inclined surface portion 372d, it is possible to smooth a surface of an upper tip end of the annular inclined surface 370b.

The impeller 370 is fixed to the shaft 331 by fitting an upper end portion of the shaft 331 into the tube portion 372a of the impeller hub 372 from the lower side. As illustrated in Fig. 13, the impeller 370 connected to the shaft 331 is disposed inward of the annular protruding portion 366c of the exhaust gas guiding member 360. Therefore, the protruding portion 366c is disposed in the vicinity of an exhaust port 370c of the impeller 370.

The protruding portion 366c guides exhaust gas discharged from the impeller 370 to the lower side together with an exhaust gas guiding portion 383 of the impeller housing 380, which will be described later. In the modification example, an outer circumferential surface of the protruding portion 366c is an inclined surface that is inclined downwards as it goes radially outwards. The outer circumferential surface of the protruding portion 366c has a curved surface-like shape that is smoothly curved outwards.

A lower end of the outer circumferential surface of the protruding portion 366c is smoothly connected to the outer circumferential surface of the cylindrical partition wall ring 366b. Therefore, the inclination angle of a lower end of the protruding portion 366c with respect to a direction perpendicular to the axial direction is substantially 90°. An upper end of the protruding portion 366c is positioned radially outward of an outer circumferential end of the base portion 373 of the impeller 370 while being close to the outer circumferential edge. The upper end of the protruding portion 366c is positioned above the lower surface of the base portion 373 and is positioned below an upper surface of the outer circumferential end of the base portion 373.

In the blower device 301 in the modification example, since the protruding portion 366c has the above-described shape and is disposed as described above, air discharged from the impeller 370 can be smoothly guided downwards without turbulent flow. At a lower end of the exhaust port 370c of the impeller 370, air is discharged from the outer circumferential end of the base portion 373 in a direction substantially perpendicular to the axial direction. In the modification example, since the upper end of the protruding portion 366c is positioned below the upper surface of the base portion 373, discharged air does not collide with the protruding portion 366c and is guided along the outer circumferential surface of the protruding portion 366c. Accordingly, it is possible to effectively transport air.

### <Impeller Housing>

As illustrated in Fig. 13, the impeller housing 380 is provided with an intake port 380a on an upper side thereof and has a cylindrical shape that becomes narrower toward the upper side in the axial direction. The impeller housing 380 includes an intake gas guiding portion 381 that is positioned at an opening end of the intake port 380a, an impeller housing main body portion 382 that accommodates the impeller 370, the skirt-shaped exhaust gas guiding portion 383 that extends radially outwards and downwards from an outer circumferential edge of the impeller housing main body portion 382, and an outer circumferential attachment ring 384 that extends upwards from an outer circumferential edge of the exhaust gas guiding portion 383.

The impeller housing main body portion 382 covers an upper side of the impeller 370. The impeller housing main body portion 382 has a sectional shape that conforms to the shroud 375 of the impeller 370. An inner surface (a lower surface) of the impeller housing main body portion 382 and an outer surface (an upper surface) of the shroud 375 face each other with a uniform gap provided therebetween.

The annular intake gas guiding portion 381 that protrudes radially inwards is positioned on an upper end portion of the impeller housing main body portion 382 that is on the inner circumferential side. As illustrated in Fig. 20, the intake gas guiding portion 381 covers an upper end surface 375b of the shroud 375 from above. A small-width gap extending in the radial direction is present between a lower surface of the intake gas guiding portion 381 and the upper end surface 375b of the shroud 375.

An outer circumferential end portion of the impeller housing main body portion 382 is provided with a curved circumferential edge portion 382a that is curved downwards around an outer circumferential end of the shroud 375. The curved circumferential edge portion 382a extends downwards and surrounds an outer end surface of the shroud 375 from the outer side in the radial direction. A small-width gap extending toward the upper side in the axial direction is present between an inner circumferential surface of the curved circumferential edge portion 382a and the outer end surface of the shroud 375.

The exhaust gas guiding portion 383 extends radially outwards and downwards from the outer circumferential edge of the impeller housing main body portion 382. As illustrated in Figs. 20 and 21, the exhaust gas guiding portion 383 constitutes an exhaust gas flow path 392 that guides exhaust gas discharged radially outwards from the impeller 370 to the lower side. An inner circumferential surface of the exhaust gas guiding portion 383 is smoothly inclined from an upper end toward a lower end and from a direction perpendicular to the axial direction toward the axial direction. The lower end of the inner circumferential surface of the exhaust gas guiding portion 383 is smoothly connected to the inner circumferential surface 365a of the outer circumferential tube portion 365 of the exhaust gas guiding member 360 to constitute an outer circumferential wall surface of the exhaust gas flow path 392.

The outer circumferential attachment ring 384 extends upwards from the outer circumferential edge of the exhaust gas guiding portion 383 and is fixed to the outer circumferential tube portion 365. The outer circumferential attachment ring 384 has a cylindrical shape. The outer circumferential attachment ring 384 includes a flange portion 384a that extends radially outwards from an upper end. An outer circumferential surface of the outer circumferential attachment ring 384 is fitted onto the inner circumferential surface of the outer circumferential tube portion 365 of the exhaust gas guiding member 360. In addition, the flange portion 384a comes into contact with an upper end of the outer circumferential tube portion 365 to determine the position of the impeller housing 380 relative to the exhaust gas guiding member 360 in the vertical direction.

An upper surface of the exhaust gas guiding portion 383 is provided with a recess portion 386 that extends in the circumferential direction. The recess portion 386 is positioned above the exhaust gas guiding portion 383. The recess portion 386 is recessed downwards. That is, the upper surface of the impeller housing 380 is provided with the recess portion 386 that is positioned above the exhaust gas guiding portion 383, extends in the circumferential direction, and is recessed downwards. The recess portion 386 is configured by the curved circumferential edge portion 382a, the exhaust gas guiding portion 383, and the outer circumferential attachment ring 384. Since the recess portion 386 is provided, the thickness of the exhaust gas guiding portion 383 of the impeller housing 380 becomes uniform. In addition, the recess portion 386 is provided with a rib 385 that connects the outer circumferential attachment ring 384 and the curved circumferential edge portion 382a of the impeller housing main body portion 382 in the radial direction.

The impeller housing 380 is manufactured through molding using a mold. That is, the impeller housing 380 is manufactured by injecting fluid material into a gap between two or more molds. The impeller housing 380 in the modification example is formed of resin material and is manufactured through injection molding. In addition, in a case where the impeller housing 380 is formed of aluminum alloy, the impeller housing 380 is manufactured through aluminum die casting. In the case of a molded product manufactured through molding using a mold, a sink mark may be generated on a surface of a thick portion due to contraction which occurs when the material is solidified and thus there may be a decrease in dimensional accuracy. In addition, in a case where aluminum die casting is performed, a pore (mold cavity) may be formed in the thick portion, which results in a decrease in strength.

In the impeller housing 380 of the modification example, the recess portion 386 is provided between the outer circumferential attachment ring 384 and the curved circumferential edge portion 382a of the impeller housing main body portion 382. Therefore, the thickness of the exhaust gas guiding portion 383 in the impeller housing 380 can be made uniform and it is possible to suppress a sink mark being generated in the vicinity of the exhaust gas guiding portion 383. In addition, similarly, it is possible to suppress a pore being formed in the exhaust gas guiding portion 383 in the impeller housing 380. Furthermore, since the recess portion 386 is provided with the rib 385 in the impeller housing 380 in the modification example, the rigidity of the outer circumferential attachment ring 384 can become higher than that of the impeller housing main body portion 382. Accordingly, the outer circumferential attachment ring 384 of the impeller housing 380 can be firmly fixed to the exhaust gas guiding member 360.

### [Board Case and Control Board]

### <Board Case>

As illustrated in Figs. 12 and 13, the board case 315 is attached to the lower side of the motor 310 and surrounds the control board 311. The board case 315 includes a circular plate-shaped bottom wall 316 and a tubular portion 317 that extends upwards from an outer edge of the bottom wall 316. The tubular portion 317 is provided with the final exhaust port 317b that penetrates the tubular portion 317 in the radial direction and through which the inside and the outside of the board case 315 communicate with each other. Exhaust gases discharged from the above-described exhaust ports (the first exhaust ports 396, the second exhaust ports 397, and the third exhaust ports 395) are discharged through the final exhaust port 317b being converged at the final exhaust port 317b.

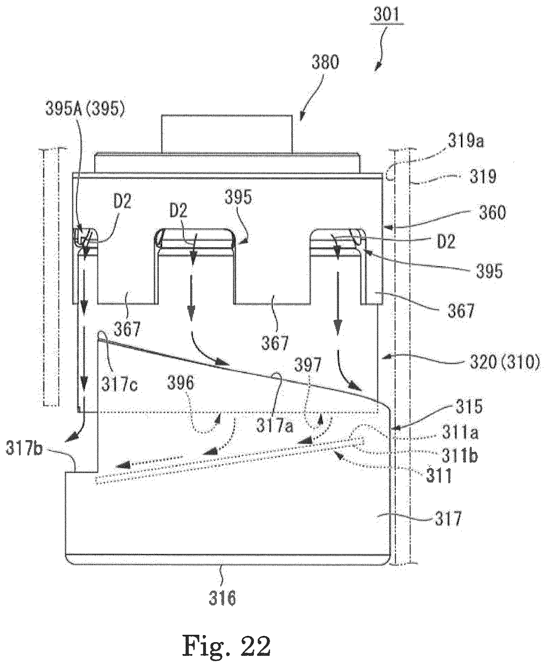

Fig. 22 is a side view of the motor 310.

As illustrated in Figs. 12 and 22, an upper end surface 317a of the tubular portion 317 is inclined spirally around the central axis J. The upper end surface 317a is inclined in the same direction as the rotation direction of the impeller 370 as it goes downwards. In addition, the final exhaust port 317b is positioned close to a spiral lower end of the upper end surface 317a. Exhaust gas discharged from the third exhaust ports 395 of the exhaust gas guiding member 360 flows downwards between the outer circumferential surface of the motor 310 and the inner circumferential surface 319a of the casing 319 that accommodates the motor 310. When the exhaust gas reaches the upper end surface 317a of the tubular portion 317, the exhaust gas is discharged after reaching the final exhaust port 317b while swirling along inclination of the upper end surface 317a. Since the upper end surface 317a guides exhaust gas with a swirling component, which is discharged in a downward oblique direction from the third exhaust ports 395, to the final exhaust port 317b without a change in flow direction at an acute angle, it is possible to reduce a possibility of a decrease in air discharging efficiency.

At least one third exhaust port 395 of the plurality of third exhaust ports 395 is positioned right above the final exhaust port 317b. Here, the third exhaust port 395 that is positioned right above the final exhaust port 317b will be referred to as a right-above-positioned exhaust port 395A. In the modification example, an uppermost end 317c of the upper end surface 317a is positioned below the inward guiding portion 367. Accordingly, exhaust gas discharged from the right-above-positioned exhaust port 395A is not guided by the upper end surface 317a and is discharged through the final exhaust port 317b while traveling a shorter distance in comparison with a case of being guided by the upper end surface 317a and thus it is possible to increase the discharging efficiency from the right-above-positioned exhaust port 395A.

A case in which, the upper end surface 317a of the modification example is an inclined surface of which the inclination angle is constant along the circumferential direction, has been described as an example. However, the upper end surface 317a may be an inclined surface of which the inclination angle changes along the circumferential direction. In this case, the upper end surface 317a is preferably an inclined surface of which the inclination angle gradually becomes gentle toward the lower side from the upper side. For example, the upper end surface 317a may be a curved surface that is curved downwards such that the center of the radius of curvature of a curved surface formed by the upper end surface is positioned above the upper end surface 317a. In this case, exhaust gas flowing downwards can be guided by the upper end surface 317a to the final exhaust port 317b while gradually swirling and thus it is possible to increase the air discharging efficiency.

### <Control Board>

The control board 311 is connected to a coil wire extending from each coil 342 and the sensor board 350 and controls the motor 310. As illustrated in Fig. 13, the control board 311 is attached to the lower side of the motor 310 via a plurality of (in the modification example, three) pillar-shaped members 313 fixed to the lower cover 322 in a state of being inclined with respect to the lower cover 322. Each pillar-shaped member 313 is screw-fixed into a screw hole 322d of the lower cover 322. The plurality of pillar-shaped members 313 have different heights. In addition, a lower end surface of each pillar-shaped member 313 is provided with an inclined surface. The control board 311 is screw-fixed to the lower end surfaces of the pillar-shaped members 313 via spacers 313a.

The control board 311 is inclined toward the final exhaust port 317b of the board case 315 inside the board case 315. That is, the lowermost point of the control board 311 is positioned close to the final exhaust port 317b.

Exhaust gas that passes through the motor 310 and is discharged to a position below the motor 310 through the first exhaust ports 396 and the second exhaust ports 397 collides with the control board 311 and cools the control board 311. Furthermore, exhaust gas is smoothly discharged toward the final exhaust port 317b along the inclination of the control board 311 after colliding with an upper surface 311a of the control board 311. That is, since the control board 311 is inclined toward the final exhaust port 317b, it is possible to increase the air discharging efficiency. Furthermore, since the control board 311 is disposed being inclined, the projected area of the control board 311 as seen in the axial direction becomes small. Therefore, it is possible to cause exhaust gas to flow into a lower surface 311b side of the control board 311 with a gap between an outer edge of the control board 311 and an inner circumferential surface of the tubular portion 317 of the board case 315 being large. Therefore, even in a case where a mounted component with a large heat generating amount such as a condenser is installed onto the lower surface 311b of the control board 311, it is possible to effectively cool the mounted component.

The position of the control board 311 in the axial direction is preferably close to the lower cover 322 such that the upper surface 311a of the control board 311 and the mounted component installed on the upper surface 311a do not interfere with the lower cover 322 of the motor 310. In this case, it is possible to increase an effect of cooling the control board 311 and to increase an effect of guiding exhaust gas to the final exhaust port 317b along the inclination of the control board 311.

### <Air Blowing Operation>

The blower device 301 in the modification example draws air into the impeller 370 via the intake port 380a as illustrated in Fig. 13 by rotating the impeller 370 with the motor 310 and discharges the air radially outwards via the air flow path in the impeller 370. Exhaust gas discharged from the impeller 370 flows into the exhaust gas guiding member 360 after passing through the exhaust gas flow path 392. The exhaust gas flow path 392 is positioned between the inner circumferential surface of the exhaust gas guiding portion 383 of the impeller housing 380 and the outer circumferential surface of the protruding portion 366c and causes exhaust gas discharged radially outwards from the impeller 370 to flow downwards. Exhaust gas flowing downwards via the exhaust gas flow path 392 flows being branched into the first guidance paths D1 and the second guidance paths D2 that are alternately disposed in the circumferential direction in the exhaust gas guiding member 360.

As illustrated in Fig. 20, exhaust gas passing through the first guidance paths D1 is guided radially inwards by the inner circumferential surfaces 367b of the inward guiding portions 367 and is rectified by the stationary blades 367a to flow into the motor 310 via the through-holes 325 and 326.

Exhaust gas flowing into the motor 310 via the through-holes 325 flows to the air flow paths FP between the stator 340 and the housing 320 illustrated in Fig. 18. In the air flow paths FP, the exhaust gas flows downwards. In the air flow paths FP, as illustrated in Fig. 16, the swirling component of exhaust gas is oriented downwards by the upper inclined projecting portions 343g of the upper insulators 343 and the lower inclined projecting portions 344g of the lower insulators 344. In the air flow paths FP, the outer circumferential surfaces of the linear portions 341c (the stator core 341) are exposed and are cooled by the exhaust gas. The plurality of plate-shaped portions 345 are positioned in the air flow paths FP and rectify the exhaust gas flowing in the air flow paths FP. The exhaust gas flowing in the air flow paths FP is discharged downwards via the lower opening portions 324 as the first exhaust ports 396.

The exhaust gas flowing into the motor 310 via the through-holes 326 flows into the stator 340 via the gaps CL as illustrated in Fig. 18. The first side end surfaces 343b, the second side end surfaces 343c, and the inclined members 346 surrounding the gaps CL guide exhaust gas passing through the gaps CL toward the exhaust gas guiding holes 348 of the molded portion 347. According to this configuration, it is possible to effectively cool the coils 342 which are heat generating portions of the motor 310. In addition, it is possible to effectively guide the exhaust gas by using the exhaust gas guiding holes 348 of the molded portion 347. The exhaust gas discharged downwards from the exhaust gas guiding holes 348 is discharged downwards via the through-holes 322a as the second exhaust ports 397.

Exhaust gas discharged from the first exhaust ports 396 and the second exhaust ports 397 collides with the upper surface 311a of the control board 311 that is fixed being inclined and cools the control board 311. Furthermore, the exhaust gas is guided toward the final exhaust port 317b of the board case 315 along the upper surface 311a of the control board 311 and is discharged.

Meanwhile, as illustrated in Fig. 21, exhaust gas passing through the second guidance paths D2 moves radially outwards due to the inner inclined portion 366d of the partition wall ring 366b and is discharged downwards via the third exhaust ports 395. The exhaust gas discharged downwards from the third exhaust ports 395 flow downwards along an outer circumferential surface of the housing 320 of the motor 310. As illustrated in Fig. 22, a portion of exhaust gas flowing along the outer circumferential surface of the housing 320 spirally swirls along the upper end surface 317a of the board case 315 and is discharged being guided by the final exhaust port 317b. Since the upper end surface 317a is inclined in the same direction as the rotation direction of the impeller 370, exhaust gas with a component to swirl in the rotation direction of the impeller 370 that is discharged from the third exhaust ports 395 can be effectively guided to the final exhaust port 317b along the outer circumferential surface of the motor 310. In addition, a portion of exhaust gas flowing along the outer circumferential surface of the housing 320 is discharged after reaching the final exhaust port 317b not via the upper end surface 317a while traveling a shorter distance in comparison with a case of being guided by the upper end surface 317a.

### <Modification Example 2>

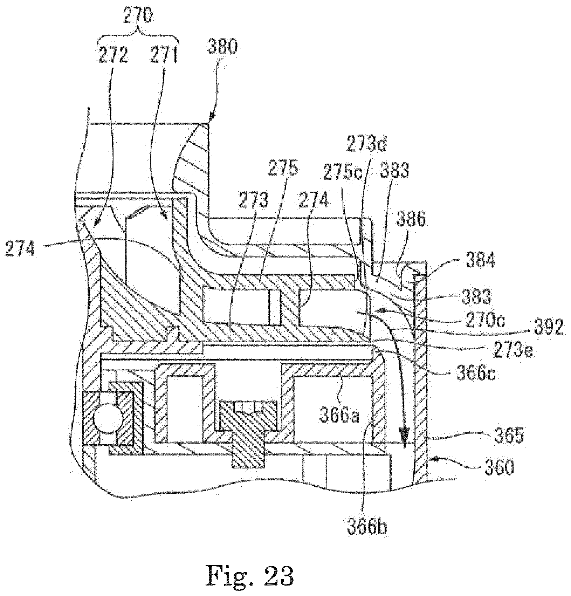

Next, an impeller 270 which can be replaced with the impellers 70 and 370 of the above-described embodiment and the modification example thereof will be described based on Fig. 23. Note that, the same constituent elements as those in the above-described embodiment and the above-described modification example are given the same reference numerals and description thereof will be omitted.

The impeller 270 includes an impeller main body 271 and an impeller hub 272. The impeller main body 271 includes a base portion 273, a plurality of moving blades 274, and a shroud 275. That is, the impeller 270 includes the base portion 273, the plurality of moving blades 274, and the shroud 275. The base portion 273 is positioned below the plurality of moving blades 274. The base portion 273 has a disk-like shape. The shroud 275 is positioned to become closer to the inner side in the radial direction as it goes upwards at a position above the moving blades 274. That is, the shroud 275 has a cylindrical shape. The base portion 273 and the shroud 275 are connected by the moving blades 274.

An upper surface of the base portion 273 includes a base portion inclined portion 273d that is inclined downwards in the axial direction as it goes radially outwards. Since the base portion inclined portion 273d is provided, air is discharged in a downward oblique direction along the base portion inclined portion 273d at a lower end of an exhaust port 270c of the impeller 270. The air discharged from the impeller 270 is guided downwards along the inner circumferential surface of the exhaust gas guiding portion 383. A direction in which exhaust gas flows can be smoothly changed to a downward direction since the exhaust gas is discharged in the downward oblique direction from the impeller 270 and thus it is possible to increase the air discharging efficiency.

Furthermore, since the base portion inclined portion 273d is provided, it is possible to reduce the size of the protruding portion 366c that is positioned radially outward of the base portion 273 and to make the diameter of the base portion 273 larger than the diameter of the shroud 275. That is, an outer edge 273e of the base portion 273 can be positioned radially outward of an outer edge 275c of the shroud 275. Accordingly, it is possible to configure the impeller 270 (particularly, the moving blades 274) to have a large diameter without an increase in dimension of the shroud 275. Generally, it is possible to configure a low-rotation high-output blower device by configuring an impeller to have a large diameter. According to the modification example, it is possible to provide a low-rotation high-output blower device with a small radial dimension.

### <Modification Example 3>

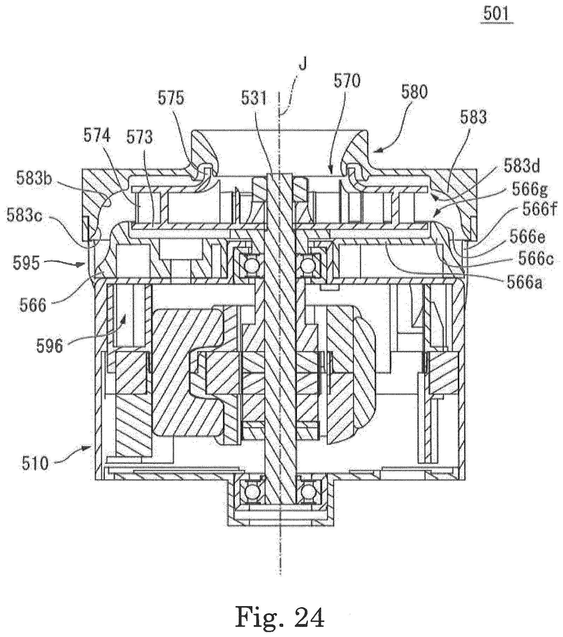

Fig. 24 is a vertical sectional view of a blower device 501 in Modification Example 3. Note that, in the modification example, the same constituent elements as those in the above-described embodiment are given the same reference numerals and description thereof will be omitted.

The blower device 501 includes a motor 510, an annular cover portion 566, an impeller 570, and an impeller housing 580. The motor 510 includes a shaft 531 that is disposed along the central axis J extending in the vertical direction. A radially outer end of the motor 510 is positioned radially outward of a radially outer end of the impeller 570.

The impeller 570 is fixed to the shaft 531. The impeller 570 includes a base portion 573, a shroud 575, and a plurality of moving blades 574. The base portion 573 is flat plate-shaped member that expands in a direction orthogonal to the shaft 531. The shroud 575 is positioned above the base portion 573 and opens upwards. The plurality of moving blades 574 are connected to the base portion 573 and the shroud 575 and are arranged in the circumferential direction.

The impeller housing 580 surrounds an upper side and a radially outer side of the impeller 570. The impeller housing 580 includes an exhaust gas guiding portion 583. The exhaust gas guiding portion 583 extends radially outwards and downwards being positioned outward of the radially outer end of the impeller 570. The impeller housing 580 includes an exhaust port 595 that is above a lower end portion of the annular cover portion 566. Therefore, in a case where the exhaust port 595 is positioned above the motor 510, it is possible to improve the air blowing efficiency of the blower device 501 even in a case where the length of a flow path configured between an inclined surface 566e which will be described and an inner circumferential surface of the exhaust gas guiding portion 583 is short. That is, since it is possible to configure a region in the flow path at which the sectional area of the flow path becomes locally small, static pressure becomes high in the region and thus turbulent flow due to separation of air in the flow path is less likely to occur.

The annular cover portion 566 is positioned above the motor 510 in the axial direction. The annular cover portion 566 includes an annular cover flat surface portion 566a and a protruding portion 566c. The annular cover flat surface portion 566a expands in a direction orthogonal to the shaft 531 and faces the base portion 573 in the axial direction. The protruding portion 566c protrudes upwards from the annular cover flat surface portion 566a being positioned outward of the radially outer end of the impeller 570. The protruding portion 566c includes the inclined surface 566e. An outer circumferential surface of the inclined surface 566e is inclined downwards as it goes radially outwards.

The position of an inner end of the protruding portion 566c in the radial direction and the position of an inner end of the exhaust gas guiding portion 583 in the radial direction are the same as each other. That is, the exhaust gas guiding portion 583 is smoothly curved radially outwards and downwards as it goes outwards from the inner end. In addition, the inclined surface 566e of the protruding portion 566c is smoothly curved radially outwards and downwards as it goes outwards from the inner end. Therefore, air discharged from the impeller is smoothly guided radially downwards and outwards by the exhaust gas guiding portion 583 and the inclined surface 566e. Therefore, in the flow path, air turbulent flow is less likely to occur in the vicinity of an inner circumferential surface of the impeller housing 580 and in the vicinity of the inclined surface 566e and thus the air blowing efficiency of the blower device 501 is improved.

The exhaust gas guiding portion 583 includes a guiding portion inner recess portion 583b and a guiding portion inner projecting portion 583c. The guiding portion inner recess portion 583b is a portion of which an inner circumferential surface is curved inwards. The guiding portion inner projecting portion 583c is positioned below the guiding portion inner recess portion 583b and is a portion of which an inner circumferential surface is curved outwards. The distance between the inclined surface 566e and the inner circumferential surface of the exhaust gas guiding portion 583 becomes shortest in a region in which the guiding portion inner projecting portion 583c and the inclined surface 566e face each other. Accordingly, the efficiency of the blower device 501 is improved. That is, when air is discharged radially outwards by the impeller 570, the air passes through a region in which the distance between the inclined surface 566e and the inner circumferential surface of the exhaust gas guiding portion 583 becomes shortest. In the region, since the sectional area of the flow path becomes locally small, static pressure becomes high and thus separation of air flow at the inner circumferential surface of the exhaust gas guiding portion 583 and the inclined surface 566e is less likely to occur. Accordingly, turbulent flow is less likely to be generated in the flow path configured between the inclined surface 566e and the inner circumferential surface of the exhaust gas guiding portion 583 and effective guidance in the flow path can be performed, so that the efficiency of the blower device 501 is improved.

The blower device 501 includes an inward exhaust port 596. The exhaust port 595 and the inward exhaust port 596 are alternately disposed in the circumferential direction. A portion of air discharged radially outwards by the impeller 570 passes through the flow path and is discharged radially outwards via the exhaust port 595. Meanwhile, the other portion of the air discharged radially outwards by the impeller 570 passes through the flow path and is guided into the motor 510 via the inward exhaust port 596.

The annular cover portion 566 includes an annular cover connection portion 566f between the exhaust port 595 and the inward exhaust port 596. At least a portion of the annular cover connection portion 566f is fixed. That is, at least a portion of the impeller housing 580 and at least a portion of the annular cover portion 566 are fixed. Accordingly, it is possible to assemble the impeller housing 580 and the annular cover portion 566 with high accuracy. That is, it is possible to manage a positional relationship between the inner circumferential surface of the impeller housing 580 and the annular cover portion 566 with high accuracy. Therefore, since it is possible to configure the sectional area of the flow path configured between the inner circumferential surface of the impeller housing 580 and the inclined surface 566e with high accuracy, it is possible to reduce a possibility of unevenness in air pressure in the flow path. In addition, it is possible to reduce vibration of the impeller housing 580.

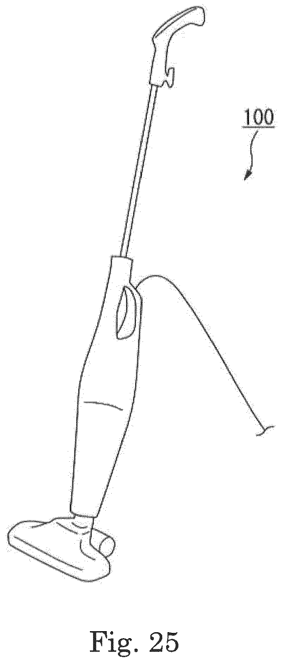

Fig. 25 is a perspective view of a vacuum cleaner 100 including the blower device described in the above-described embodiment or any one of the modification examples. The vacuum cleaner 100 includes the above-described blower device. Accordingly, it is possible to install a large motor in the small vacuum cleaner 100. Note that, the blower device described in the above-described embodiment or any one of the modification examples may not be installed in the vacuum cleaner 100 and may be installed in other electronic devices.

While the embodiment of the present invention and the modification examples have been described above, the configurations and combinations thereof in the embodiment and the modifications examples are merely an example, and modifications such as addition, omission, substitution, and the like of configurations are possible without departing from the spirit of the present invention. In addition, the invention is not limited by the embodiment. Reference Signs List

1, 301, 501 blower device
10, 310, 510 motor
20, 320 housing
31, 331, 531 shaft
40, 340 stator
50a, 350a main body portion
50b, 66c, 68b, 350b, 366c, 566c protruding portion
60, 61 stationary blade member
60a stationary blade supporting ring
61a first stationary blade member
61b second stationary blade member
62 lower stationary blade supporting ring
62a inclined portion
63, 68, 368 attachment ring
66b upper stationary blade supporting ring
66e, 348c, 566e inclined surface
67a upper stationary blade
67a, 367a stationary blade
67b lower stationary blade
68a, 72a, 372a tube portion
70, 270, 370, 570 impeller
70a, 80a, 370a, 380a intake port
70c, 95, 270c, 370c, 595 exhaust port
72c, 372c projecting portion
73, 273, 373, 573 base portion
73c, 373c, 386 recess portion
74, 274, 374, 574 moving blade
75, 275, 375, 575 shroud
80, 380, 580 impeller housing
82, 382 impeller housing main body portion
83, 383, 583 exhaust gas guiding portion
83b, 583b guiding portion inner recess portion
83c, 583c guiding portion inner projecting portion
100 vacuum cleaner
273d base portion inclined portion
273e, 275c outer edge
311a upper surface
311b lower surface
319a, 365a, 367b inner circumferential surface
360 exhaust gas guiding member (stationary blade member)
365 outer circumferential tube portion
366b partition wall ring (stationary blade supporting ring)
366e outer circumferential surface
384 outer circumferential attachment ring
395 third exhaust port (exhaust port)
J central axis

## Claims

1. A blower device comprising:
a motor that includes a shaft centered around a central axis extending in a vertical direction, a stator surrounding the shaft, and a housing holding the stator;
an impeller that is connected to an upper side of the shaft;
an impeller housing that accommodates the impeller and includes an intake port; and
an exhaust port that is positioned below a circumferential edge portion of the impeller housing,
wherein the exhaust port is positioned above the housing and opens downwards along a circumferential direction.

2. The blower device according to Claim 1,
wherein the exhaust port opens around the central axis.

3. The blower device according to Claim 1 or 2, further comprising:
a stationary blade member that is positioned between the impeller housing and the housing,
wherein the stationary blade member includes
a plurality of stationary blades that are positioned below the circumferential edge portion of the impeller housing, and
a stationary blade supporting ring that supports the plurality of stationary blades, and
wherein the stationary blade supporting ring includes an inclined portion that expands radially outwards as it goes downwards.

4. The blower device according to Claim 3,
wherein the stationary blade member includes a first stationary blade member and a second stationary blade member that is separated from the first stationary blade member,
wherein the first stationary blade member includes a lower stationary blade supporting ring that is a portion of the stationary blade supporting ring and that includes the inclined portion, and
wherein the second stationary blade member includes the stationary blades and an upper stationary blade supporting ring that is a portion of the stationary blade supporting ring and is positioned above the lower stationary blade supporting ring.

5. The blower device according to Claim 4,
wherein at least a portion of a lower portion of the second stationary blade member abuts onto at least a portion of an upper portion of the first stationary blade member.

6. The blower device according to any one of Claims 3 to 5,
wherein the impeller includes a plurality of moving blades and a disc-shaped base portion that is positioned below the moving blades,
wherein the stationary blade member includes an annular protruding portion that protrudes upwards and is positioned radially outward of the impeller,
wherein the protruding portion includes an outer circumferential surface that is inclined downwards as it goes radially outwards, and
wherein an upper end of the protruding portion is positioned above a lower surface of the base portion and is positioned below an outer end of an upper surface of the base portion.

7. The blower device according to any one of Claims 3 to 6,
wherein the stationary blade member includes an outer circumferential tube portion that is positioned outward of the stationary blade supporting ring,
wherein the impeller housing includes
an impeller housing main body portion that covers an upper side of the impeller,
an exhaust gas guiding portion that extends radially outwards and downwards from an outer circumferential edge of the impeller housing main body portion, and
an outer circumferential attachment ring that extends upwards from an outer circumferential edge of the exhaust gas guiding portion and is fixed to the outer circumferential tube portion, and
wherein an upper surface of the impeller housing is provided with a recess portion that is positioned above the exhaust gas guiding portion, extends in the circumferential direction, and is recessed downwards.

8. The blower device according to any one of Claims 1 to 7,
wherein the impeller includes
the plurality of moving blades,
the disc-shaped base portion that is positioned below the moving blades, and
a cylindrical shroud that is positioned to become closer to the inner side in a radial direction as it goes upwards at a position above the moving blades,
wherein an outer edge of the base portion is positioned radially outward of an outer edge of the shroud, and
wherein the upper surface of the base portion includes a base portion inclined portion that is inclined downwards in an axial direction as it goes radially outwards.

9. The blower device according to Claim 7,
wherein the exhaust gas guiding portion includes
a guiding portion inner recess portion of which an inner circumferential surface is curved inwards, and
a guiding portion inner projecting portion that is positioned below the guiding portion inner recess portion and of which an inner circumferential surface is curved outwards,
wherein the stationary blade member includes
the annular protruding portion that protrudes upwards and is positioned radially outward of the impeller,
wherein the protruding portion includes the outer circumferential surface that is inclined downwards as it goes radially outwards, and
wherein a distance between the outer circumferential surface of the protruding portion and an inner circumferential surface of the exhaust gas guiding portion becomes shortest in a region in which the guiding portion inner projecting portion and the outer circumferential surface of the protruding portion face each other.

10. A vacuum cleaner comprising:
the blower device according to any one of Claims 1 to 9.
